# EUROPEAN PATENT APPLICATION

(11) **EP 4 704 298 A1**
(43) Date of publication of application: **04.03.2026**
(21) Application number: 24796319.2
(22) Date of filing: 28.04.2024
(51) Int. Cl.: H02J 7/34

(54) **ENERGY SUPPLY SYSTEM, POWER SUPPLY SYSTEM, AND WORKING SYSTEM**

(30) Priority: 28.04.2023 CN 202310483199; 19.10.2023 CN 202311360266
(71) Applicant: Positec Power Tools (Suzhou) Co., Ltd., Suzhou, Jiangsu 215123 (CN)
(72) Inventor: WU, Hongbing, Suzhou, Jiangsu 215123 (CN); JIAO, Shiping, Suzhou, Jiangsu 215123 (CN); LIN, Wei, Suzhou, Jiangsu 215123 (CN)
(74) Representative: Kilburn & Strode LLP
(86) International application number: PCT/CN2024/090378
(87) International publication number: WO 2024/222950

(57) **Abstract**

The present application relates to a power supply system, comprising a battery pack system and an energy supply system; the battery pack system includes a backpack battery pack and a handheld battery pack, the backpack battery pack is configured to be detachably mounted to a first type of power tool to supply power thereto, and the handheld battery pack is configured to be detachably mounted to a second type of power tool to supply power thereto; wherein, the backpack battery pack is configured to be carried by a user; the energy supply system includes a DC charging device, and the DC charging device is configured to convert electric energy of the backpack battery pack and transmit the electric energy to the handheld battery pack, so that the backpack battery pack charges the handheld battery pack.

## Description

The present application claims the priority of the Chinese patent application with the filing date of April 28, 2023 and the application number of 202310483199.7, and the Chinese patent application with the filing date of October 19, 2023 and the application number of 202311360266.2, the entire contents of which are incorporated into the present application by reference.

### TECHNICAL FIELD

The present application relates to an energy supply system, a power supply system and a working system.

### BACKGROUND

In some operation scenarios, such as outdoor operation scenarios, power tools are often required to work continuously for a long time. To realize the continuous work of the power tools, the selection of a power source is the primary factor to be considered.

Generally speaking, power tools using fuel oil as a power source (hereinafter referred to as fuel-powered tools, such as gasoline-powered tools) can meet the requirements of long-time continuous work. However, the main problems of the fuel-powered tools are that the exhaust gas emitted by them pollutes the environment, and the noise generated by the fuel-powered tools during operation is relatively large, which causes noise pollution to the surrounding environment.

Power tools have the advantages of environmental protection and cleanness, and compared with fuel-powered tools, the noise generated by the power tools is relatively small. Therefore, power tools are more and more favored by users of power tools. However, the main problem of the power tools is that battery packs can provide a short battery life. This problem will be particularly prominent in outdoor scenarios or scenarios without commercial power sockets.

In order to meet the use requirement that the power tools can work continuously for a long time even without commercial power sockets, a common solution is that a user purchases an energy storage power source and a power supply device, the energy storage power source has sufficient electric quantity to meet the requirement of continuous work for a long time, and then the power supply device is used to transmit the electric power of the energy storage power source to battery packs for supplying power to the power tools, so that the battery packs meet the power requirement of long-time work.

### SUMMARY

Based on this, the present application provides a power supply system, comprising a battery pack system and an energy supply system; the battery pack system comprises a backpack battery pack and a handheld battery pack, the backpack battery pack is configured to be detachably mounted to a first type of power tool to supply power thereto, and the handheld battery pack is configured to be detachably mounted to a second type of power tool to supply power thereto; wherein, the backpack battery pack is configured to be carried by a user; the energy supply system comprises a DC charging device, the DC charging device comprises an input interface and an output interface, the input interface is configured to detachably mount the backpack battery pack, and the output interface is configured to detachably mount the handheld battery pack; the DC charging device further comprises at least one DC charging module, and the DC charging module is configured to receive electric energy from the input interface, convert the electric energy and transmit the electric energy to the output interface, so that the backpack battery pack charges the handheld battery pack.

In one embodiment, the power supply system further comprises a carrying device, the carrying device is configured to be carried by the user, the carrying device comprises a cable, and a plug interface and a first carrying interface connected by the cable, the first carrying interface is configured to detachably mount the backpack battery pack, the plug interface is configured to detachably connect the second type of power tool, and when the second type of power tool is connected to the plug interface and the backpack battery pack is mounted to the first carrying interface, the backpack battery pack supplies power to the second type of power tool.

In one embodiment, the first carrying interface comprises a pair of first connecting portions extending along a first plugging direction, and the pair of first connecting portions is configured to guide the backpack battery pack to connect with the carrying device along the first plugging direction.

In one embodiment, the power supply system further comprises a carrying device, the carrying device is configured to be carried by a user, the carrying device comprises a cable, and a plug interface and a second carrying interface connected by the cable, the second carrying interface is configured to detachably mount the handheld battery pack, the plug interface is configured to detachably connect the second type of power tool, and when the second type of power tool is connected to the plug interface and the handheld battery pack is mounted to the second carrying interface, the handheld battery pack supplies power to the second type of power tool.

In one embodiment, the second carrying interface comprises a pair of second connecting portions extending along a second plugging direction, and the second connecting portions are used for guiding the handheld battery pack to connect with the carrying device along the second plugging direction.

In one embodiment, the first type of power tool further comprises a backpack frame, the backpack frame is configured for a user to carry the first type of power tool, and the backpack battery pack is configured to be detachably mounted to the backpack frame, so that the backpack battery pack supplies power to the first type of power tool.

In one embodiment, the handheld battery pack is configured to be detachably mounted to the first type of power tool, so that the handheld battery pack supplies power to the first type of power tool.

In one embodiment, the rated power of the first type of power tool is greater than the rated power of the second type of power tool.

In one embodiment, the weight range of the backpack battery pack is 4-12 Kg.

In one embodiment, the rated electric quantity range of the backpack battery pack is 550-3000 Wh.

In one embodiment, the ratio range of the rated electric quantity to the weight of the backpack battery pack is 60-300Wh/Kg.

In one embodiment, the ratio range of the rated electric quantity to the volume of the backpack battery pack is 40-220Wh/L.

In one embodiment, the discharge rate of the backpack battery pack is greater than or equal to 2C.

In one embodiment, the maximum output power of the backpack battery pack is greater than or equal to 2 Kw.

In one embodiment, the average charging power of the DC charging device for the handheld battery pack is greater than the average discharge power of the second type of power tool for the handheld battery pack.

In one embodiment, wherein when the handheld battery pack is charged at a rate of 3C, the temperature rise of the handheld battery pack does not exceed 14°C at an ambient temperature of about 20°C; and/or when the handheld battery pack is charged at a rate of 5C, the temperature rise of the handheld battery pack does not exceed 19°C at an ambient temperature of about 20°C; when the handheld battery pack is charged at a rate of 10C, the temperature rise of the handheld battery pack does not exceed 24°C at an ambient temperature of about 25°C.

In one embodiment, the internal resistance of a single cell in the handheld battery pack is less than or equal to 3mΩ.

In one embodiment, the weight range of the handheld battery pack is 1-3.5 Kg.

In one embodiment, the ratio range of the rated electric quantity to the weight of the backpack battery pack is 60-300Wh/Kg, and the maximum allowable charging rate of the handheld battery pack is not less than 7C.

In one embodiment, the discharge rate of the backpack battery pack is greater than or equal to 2C.

In one embodiment, the time required for the handheld battery pack to be charged from an empty state to a full state is less than or equal to the time required for the handheld battery pack to be discharged from the full state to the empty state.

In one embodiment, the internal resistance of a single cell in the handheld battery pack is less than or equal to 3mΩ.

In one embodiment, when the handheld battery pack is charged at a rate of 3C, the temperature rise of the handheld battery pack does not exceed 14°C at an ambient temperature of about 20°C; and/or when the handheld battery pack is charged at a rate of 5C, the temperature rise of the handheld battery pack does not exceed 19°C at an ambient temperature of about 20°C; when the handheld battery pack is charged at a rate of 10C, the temperature rise of the handheld battery pack does not exceed 24°C at an ambient temperature of about 25°C.

In one embodiment, the ratio of the rated electric quantity to the weight of the backpack battery pack is greater than the ratio of the rated electric quantity to the weight of the handheld battery pack.

In one embodiment, the maximum allowable charging rate of the handheld battery pack is greater than the maximum allowable charging rate of the backpack battery pack.

In one embodiment, under the condition of charging at the same rate, the temperature rise of the handheld battery pack is less than the temperature rise of the backpack battery pack.

In one embodiment, the internal resistance of a single cell in the handheld battery pack is less than the internal resistance of a single cell in the backpack battery pack.

In one embodiment, the rated capacity of the backpack battery pack is defined as a first capacity, the rated capacity of the handheld battery pack is defined as a second capacity, and the first capacity is greater than the second capacity.

In one embodiment, the ratio of the first capacity to the second capacity is greater than or equal to 2.

In one embodiment, the DC charging device is only provided with the input interface for receiving power input.

In one embodiment, the input interface is configured to only receive power input from the backpack battery pack and not output power to the outside; and the output interface is configured to only output power to the handheld battery pack and not receive power input from the outside.

In one embodiment, the input interface comprises a pair of first connecting portions extending along a first sliding direction, and the first connecting portions are used for guiding the backpack battery pack to connect with the DC charging device along the first sliding direction; and/or the output interface comprises a pair of second connecting portions extending along a second sliding direction, and the second connecting portions are used for guiding the handheld battery pack to connect with the DC charging device along the second sliding direction.

In one embodiment, the maximum size of the first connecting portions in the first sliding direction is greater than the maximum size of the second connecting portions in the second sliding direction.

In one embodiment, the DC charging device comprises a housing extending longitudinally along a height direction, and the input interface and the output interface are oppositely arranged along a width direction perpendicular to the height direction.

In one embodiment, the DC charging device further comprises a heating module and/or a cooling module, which is configured to heat and/or cool the backpack battery pack and the handheld battery pack.

In one embodiment, the energy supply system further comprises at least one AC charging device, the AC charging device comprises an input power interface, at least one charging interface and at least one AC charging module, the input power interface is configured to connect to an AC power source, the charging interface is configured to detachably mount the backpack battery pack and/or the handheld battery pack, and the AC charging module is configured to receive AC electric energy from the input power interface, convert the AC electric energy into DC electric energy and output the DC electric energy to the charging interface, so as to charge the backpack battery pack and/or the handheld battery pack.

In one embodiment, the structure of the charging interface is the same as that of the input interface; and/or the structure of the charging interface is the same as that of the output interface; and/or the charging interface comprises the structures of the input interface and the output interface.

In one embodiment, the energy supply system further comprises a charging cabinet, the charging cabinet comprises at least one charging cabinet interface and at least one charging module, the charging cabinet interface is configured to be detachably connected to the backpack battery pack and/or the handheld battery pack, and the charging module is configured to receive electric energy from the charging interface and transmit the electric energy to the charging cabinet interface, so as to charge the backpack battery pack and/or the handheld battery pack.

In one embodiment, the energy supply system further comprises a connecting device, the charging cabinet comprises an input interface, and the connecting device is configured to connect the charging interface and the input interface of the charging cabinet, so as to transmit the electric energy output by the charging interface to the charging cabinet.

In one embodiment, the connecting device comprises a cable and an adapter connected to the cable, the cable is configured to connect to the input interface of the charging cabinet, and the adapter is configured to be detachably connected to the charging interface.

In one embodiment, the charging cabinet comprises a cabinet body and a cover body, the cabinet body encloses a containing space for containing the backpack battery pack and/or the handheld battery pack, and the cover body is operable to open or close the containing space.

In one embodiment, the charging cabinet is provided with a thermal management module, which is configured to control the temperature of the backpack battery pack and/or the handheld battery pack.

The present application further provides a working system, comprising the aforementioned power supply system and a power tool system; the power tool system comprises a first type of power tool and a second type of power tool, the first type of power tool comprises a first tool interface, and the second type of power tool comprises a second tool interface different from the first tool interface.

In one embodiment, the working system further comprises a cart, the cart comprises a main body and rollers supporting the main body, and the cart is used for transporting at least one of the power tool system, the battery pack system and the energy supply system.

In one embodiment, the rated power of the first type of power tool is greater than the rated power of the second type of power tool.

The present application further provides a power supply system, comprising a battery pack system and an energy supply system; the battery pack system comprises a first type of battery pack and a second type of battery pack, the first type of battery pack is configured to be detachably mounted to a first type of power tool to supply power thereto, and the second type of battery pack is configured to be detachably mounted to a second type of power tool to supply power thereto; wherein, the rated electric quantity range of the first type of battery pack is 550-3000Wh, and the weight range of the first type of battery pack is 4-12 Kg; the energy supply system comprises a DC charging device, the DC charging device comprises an input interface and an output interface, the input interface is configured to detachably mount the first type of battery pack, and the output interface is configured to detachably mount the first type of battery pack; the DC charging device further comprises at least one DC charging module, and the DC charging module is configured to receive electric energy from the input interface, convert the electric energy and transmit the converted electric energy to the output interface, so that the first type of battery pack charges the second type of battery pack.

In one embodiment, the first type of battery pack is configured to be carried by a user.

In one embodiment, the power supply system further comprises a carrying device, the carrying device is configured to be carried by a user, the carrying device comprises a cable, and a plug interface and a first carrying interface connected by the cable, the first carrying interface is configured to detachably mount the first type of battery pack, the plug interface is configured to detachably connect the second type of power tool, and when the second type of power tool is connected to the plug interface and the first type of battery pack is mounted to the first carrying interface, the first type of battery pack supplies power to the second type of power tool.

In one embodiment, the first carrying interface comprises a pair of first connecting portions extending along a first plugging direction, and the first connecting portions are used for guiding the first type of battery pack to connect with the carrying device along the first plugging direction.

In one embodiment, the power supply system further comprises a carrying device, the carrying device is configured to be carried by a user, the carrying device comprises a cable, and a plug interface and a second carrying interface connected by the cable, the second carrying interface is configured to detachably mount the second type of battery pack, the plug interface is configured to detachably connect the second type of power tool, and when the second type of power tool is connected to the plug interface and the second type of battery pack is mounted to the second carrying interface, the second type of battery pack supplies power to the second type of power tool.

In one embodiment, the second carrying interface comprises a pair of second connecting portions extending along a second plugging direction, and the second connecting portions are used for guiding the second type of battery pack to connect with the carrying device along the second plugging direction.

In one embodiment, the first type of power tool further comprises a backpack frame, the backpack frame is configured for a user to carry the first type of power tool, and the first type of battery pack is configured to be detachably mounted to the backpack frame, so that the first type of battery pack supplies power to the first type of power tool.

In one embodiment, the second type of battery pack is configured to be detachably mounted to the first type of power tool, so that the second type of battery pack supplies power to the first type of power tool.

In one embodiment, the ratio range of the rated electric quantity to the weight of the first type of battery pack is 60-300Wh/Kg.

In one embodiment, the ratio range of the rated electric quantity to the volume of the first type of battery pack is 40-220Wh/L.

In one embodiment, the discharge rate of the first type of battery pack is greater than or equal to 2C.

In one embodiment, the maximum output power of the first type of battery pack is greater than or equal to 2 KW.

In one embodiment, the average charging power of the DC charging device for the second type of battery pack is greater than the average discharge power of the second type of power tool for the second type of battery pack.

In one embodiment, when the second type of battery pack is charged at a rate of 3C, the temperature rise of the second type of battery pack does not exceed 14°C at an ambient temperature of about 20°C; and/or when the second type of battery pack is charged at a rate of 5C, the temperature rise of the second type of battery pack does not exceed 19°C at an ambient temperature of about 20°C; when the second type of battery pack is charged at a rate of 10C, the temperature rise of the second type of battery pack does not exceed 24°C at an ambient temperature of about 25°C.

In one embodiment, the internal resistance of a single cell in the second type of battery pack is less than or equal to 3mΩ.

In one embodiment, the weight range of the second type of battery pack is 1-3.5 Kg.

In one embodiment, the ratio range of the rated electric quantity to the weight of the first type of battery pack is 60-300Wh/Kg, and the maximum allowable charging rate of the second type of battery pack is not less than 7C.

In one embodiment, the discharge rate of the first type of battery pack is greater than or equal to 2C.

In one embodiment, the time required for the handheld battery pack to be charged from an empty state to a full state is less than or equal to the time required for the handheld battery pack to be discharged from the full state to the empty state.

In one embodiment, the internal resistance of a single cell in the second type of battery pack is less than or equal to 3mΩ.

In one embodiment, when the second type of battery pack is charged at a rate of 3C, the temperature rise of the second type of battery pack does not exceed 14°C at an ambient temperature of about 20°C; and/or when the second type of battery pack is charged at a rate of 5C, the temperature rise of the second type of battery pack does not exceed 19°C at an ambient temperature of about 20°C; and when the second type of battery pack is charged at a rate of 10C, the temperature rise of the second type of battery pack does not exceed 24°C at an ambient temperature of about 25°C.

In one embodiment, the ratio of the rated electric quantity to the weight of the first type of battery pack is greater than the ratio of the rated electric quantity to the weight of the second type of battery pack.

In one embodiment, the maximum allowable charging rate of the second type of battery pack is greater than the maximum allowable charging rate of the first type of battery pack.

In one embodiment, under the condition of charging at the same rate, the temperature rise of the second type of battery pack is less than the temperature rise of the first type of battery pack.

In one embodiment, the internal resistance of a single cell in the second type of battery pack is less than the internal resistance of a single cell in the first type of battery pack.

In one embodiment, the rated capacity of the first type of battery pack is defined as a first capacity, the rated capacity of the second type of battery pack is defined as a second capacity, and the first capacity is greater than the second capacity.

In one embodiment, the ratio of the first capacity to the second capacity is greater than or equal to 2.

In one embodiment, the DC charging device is only provided with the input interface for receiving power input.

In one embodiment, the input interface is configured to only receive power input from the first type of battery pack and not output power to the outside; and the output interface is configured to only output power to the second type of battery pack and not receive power input from the outside.

In one embodiment, the input interface comprises a pair of first connecting portions extending along a first sliding direction, and the first connecting portions are used for guiding the first type of battery pack to connect with the DC charging device along the first sliding direction; and/or the output interface comprises a pair of second connecting portions extending along a second sliding direction, and the second connecting portions are used for guiding the second type of battery pack to connect with the DC charging device along the second sliding direction.

In one embodiment, the maximum size of the first connecting portions in the first sliding direction is greater than the maximum size of the second connecting portions in the second sliding direction.

In one embodiment, the DC charging device comprises a housing extending longitudinally along a height direction, and the input interface and the output interface are oppositely arranged along a width direction perpendicular to the height direction.

In one embodiment, the DC charging device further comprises a heating module and/or a cooling module, which is configured to heat and/or cool the first type of battery pack and the second type of battery pack.

In one embodiment, the energy supply system further comprises at least one AC charging device, the AC charging device comprises an input power interface, at least one charging interface and at least one AC charging module, the input power interface is configured to connect to an AC power source, the charging interface is configured to detachably mount the first type of battery pack and/or the second type of battery pack, and the AC charging module is configured to receive AC electric energy from the input power interface, convert the AC electric energy into DC electric energy and output the DC electric energy to the charging interface, so as to charge the first type of battery pack and/or the second type of battery pack.

In one embodiment, the structure of the charging interface is the same as that of the input interface; and/or the structure of the charging interface is the same as that of the output interface; and/or the charging interface comprises the structures of the input interface and the output interface.

In one embodiment, the energy supply system further comprises a charging cabinet, the charging cabinet comprises at least one charging cabinet interface and at least one charging module, the charging cabinet interface is configured to be detachably connected to the first type of battery pack and/or the second type of battery pack, and the charging module is configured to receive electric energy from the charging interface and transmit the electric energy to the charging cabinet interface, so as to charge the first type of battery pack and/or the second type of battery pack.

In one embodiment, the energy supply system further comprises a connecting device, the charging cabinet comprises an input interface, and the connecting device is configured to connect the charging interface and the input interface of the charging cabinet, so as to transmit the electric energy output by the charging interface to the charging cabinet.

In one embodiment, the connecting device comprises a cable and an adapter connected to the cable, the cable is configured to connect to the input interface of the charging cabinet, and the adapter is configured to be detachably connected to the charging interface.

In one embodiment, the charging cabinet comprises a cabinet body and a cover body, the cabinet body encloses a containing space for containing the first type of battery pack and/or the second type of battery pack, and the cover body is operable to open or close the containing space.

In one embodiment, the charging cabinet is provided with a thermal management module, and the thermal management module is configured to control the temperature of the first type of battery pack and/or the second type of battery pack.

The present application further provides a working system, comprising the aforementioned power supply system and a power tool system; the power tool system includes a first type of power tool and a second type of power tool, the first type of power tool includes a first tool interface, and the second type of power tool includes a second tool interface different from the first tool interface.

In one embodiment, the working system further comprises a cart, the cart comprises a main body and rollers supporting the main body, and the cart is used for transporting at least one of the power tool system, the battery pack system and the energy supply system.

In one embodiment, the rated power of the first type of power tool is greater than the rated power of the second type of power tool.

The present application further provides an energy supply system, comprising a DC charging device, the DC charging device comprising: an input interface and an output interface, the input interface is configured to detachably mount a first type of battery pack, and the output interface is configured to detachably mount a second type of battery pack; a DC charging module, the DC charging module is configured to receive electric energy from the input interface, convert the electric energy and transmit the converted electric energy to the output interface, so that the first type of battery pack charges the second type of battery pack; wherein, the DC charging device is only provided with the input interface for receiving power input.

In one embodiment, the input interface is configured to only receive power input from the first type of battery pack and not output power to the outside; and the output interface is configured to only output power to the second type of battery pack and not receive power input from the outside.

In one embodiment, the input interface comprises a pair of first connecting portions extending along a first plugging direction, and the first connecting portions are used for guiding the first type of battery pack to connect with the DC charging device along the first plugging direction; and/or the output interface comprises a pair of second connecting portions extending along a second plugging direction, and the second connecting portions are used for guiding the second type of battery pack to connect with the DC charging device along the second plugging direction.

In one embodiment, the maximum size of the first connecting portions in the first plugging direction is greater than the maximum size of the second connecting portions in the second plugging direction.

In one embodiment, the DC charging device comprises a housing extending longitudinally along a height direction, and the input interface and the output interface are oppositely arranged along a width direction perpendicular to the height direction.

In one embodiment, the DC charging device further comprises a heating module and/or a cooling module, which is configured to heat and/or cool the first type of battery pack and the second type of battery pack.

In one embodiment, the energy supply system further comprises at least one AC charging device, the AC charging device comprises an input power interface, at least one charging interface and at least one AC charging module, the input power interface is configured to connect to an AC power source, the charging interface is configured to detachably mount the first type of battery pack and/or the second type of battery pack, and the AC charging module is configured to receive AC electric energy from the input power interface, convert the AC electric energy into DC electric energy and output the DC electric energy to the charging interface, so as to charge the first type of battery pack and/or the second type of battery pack.

In one embodiment, the structure of the charging interface is the same as that of the input interface; and/or the structure of the charging interface is the same as that of the output interface; and/or the charging interface comprises the structures of the input interface and the output interface.

In one embodiment, the energy supply system further comprises a charging cabinet, the charging cabinet comprises at least one charging cabinet interface and at least one charging module, the charging cabinet interface is configured to be detachably connected to the first type of battery pack and/or the second type of battery pack, and the charging module is configured to receive electric energy from the charging interface and transmit the electric energy to the charging cabinet interface, so as to charge the first type of battery pack and/or the second type of battery pack.

In one embodiment, the energy supply system further comprises a connecting device, the charging cabinet comprises an input interface, and the connecting device is configured to connect the charging interface and the input interface of the charging cabinet, so as to transmit the electric energy output by the charging interface to the charging cabinet.

In one embodiment, the connecting device comprises a cable and an adapter connected to the cable, the cable is configured to connect to the AC charging device, and the adapter is configured to be detachably connected to the charging interface.

In one embodiment, the charging cabinet comprises a cabinet body and a cover body, the cabinet body encloses a containing space for containing the first type of battery pack and/or the second type of battery pack, and the cover body is operable to open or close the containing space.

In one embodiment, the charging cabinet is provided with a thermal management module, and the thermal management module is configured to control the temperature of the first type of battery pack and/or the second type of battery pack.

### BRIEF DESCRIPTION OF THE DRAWINGS

Embodiments of the present application will be further described below in conjunction with the following drawings:
Figure 1 is a schematic diagram of a working system provided by the present application.
Figure 2 is a schematic diagram of a power tool system provided by the present application.
Figure 3 is a schematic diagram of a battery pack system provided by the present application.
Figure 4 is a schematic diagram showing that a backpack battery pack provided by the present application can supply power to a first type of power tool.
Figure 5 is a schematic diagram showing that a backpack battery pack provided by the present application is mounted to a lawn mower.
Figure 6 is a schematic diagram of a first tool interface provided by the present application.
Figure 7 is a schematic diagram of a backpack battery pack provided by the present application.
Figure 8 is a schematic diagram showing that a handheld battery pack provided by the present application can supply power to a first type of power tool.
Figure 9 is a schematic diagram showing that a handheld battery pack provided by the present application is mounted to a lawn mower.
Figure 10 is a schematic diagram of a handheld battery pack provided by the present application.
Figure 11 is a schematic diagram showing that a backpack battery pack provided by the present application is mounted to a backpack blower.
Figure 12 is a schematic diagram showing that a handheld battery pack provided by the present application can supply power to a second type of power tool.
Figure 13 is a schematic diagram showing that a handheld battery pack provided by the present application is mounted to a grass trimmer.
Figure 14 is a schematic diagram showing that a backpack battery pack provided by the present application supplies power to a second type of power tool through a carrying device.
Figure 15 is a schematic diagram of a carrying device provided by the present application.
Figure 16 is a schematic diagram showing that a handheld battery pack provided by the present application supplies power to a second type of power tool through a carrying device.
Figure 17 is a schematic diagram of a DC charging device provided by the present application from one viewing angle.
Figure 18 is a schematic diagram of a DC charging device provided by the present application from another viewing angle.
Figure 19 is a schematic diagram showing that a backpack battery pack and a handheld battery pack provided by the present application are mounted to a DC charging device.
Figure 20 is a schematic diagram showing that another backpack battery pack and a handheld battery pack provided by the present application are mounted to a DC charging device.
Figure 21 is a schematic diagram of a circuit structure of a power supply system provided by the present application.
Figure 22 is a schematic diagram of an internal air passage structure of a DC charging device provided by the present application.
Figure 23 is a schematic diagram of structures of a first air passage and a second air passage provided by the present application.
Figure 24 is a schematic diagram of an AC charging device provided by the present application.
Figure 25 is a schematic diagram of a charging cabinet provided by the present application.
Figure 26 is a schematic diagram showing that an AC charging device and a charging cabinet provided by the present application are connected through a connecting device.
Figure 27 is a schematic diagram of a circuit structure of an energy supply system provided by the present application.
Figure 28 is a schematic diagram of a circuit structure of another energy supply system provided by the present application.
Figure 29 is a schematic diagram showing that a cart provided by the present application transports a power supply system and a power tool system.
Figure 30 is a schematic diagram of an energy supply system provided by the present application.

### DETAILED DESCRIPTION

The present application will be described in detail below with reference to the embodiments shown in the drawings. However, these embodiments do not limit the present application, and structural, method, or functional transformations made by those of ordinary skill in the art based on these embodiments are all included in the protection scope of the present application.

It should be noted that when an element is referred to as being "fixed to" another element, it can be directly on the other element or there can be an intervening element. When an element is considered to be "connected" to another element, it can be directly connected to the other element or there may be an intervening element at the same time. In the embodiments shown, directions such as up, down, left, right, front, and rear are relative, and are used to explain that the structures and movements of different components in the present application are relative. These directions are appropriate when the components are in the positions shown in the figures. However, if the description of the positions of the elements changes, it is considered that these directions will also change accordingly.

Unless otherwise defined, all technical and scientific terms used herein have the same meaning as commonly understood by those skilled in the technical field of the present application. The terms used in the specification of the present application herein are only for the purpose of describing specific embodiments, and are not intended to limit the present application. The term "and/or" as used herein includes any and all combinations of one or more related listed items.

Electric power is an environmentally friendly and clean energy source. Therefore, power tools are more and more favored by people. In particular, garden maintenance work itself has the attribute of green environmental protection. Therefore, for garden workers or garden companies, power tools are the most ideal choice. However, the main problem of current power tools is insufficient power supply, which cannot support the power tools to work continuously for a long time. In addition, garden work is usually carried out outdoors, where there are often no commercial power sockets, resulting in that even if power tools are used, the power tools cannot be recharged in time.

In order to meet the use requirement that the power tools can work continuously for a long time even without commercial power sockets, a common solution is that a user purchases an energy storage power source and a power supply device, the energy storage power source has sufficient electric quantity to meet the requirement of continuous work for a long time, and then the power supply device is used to transmit the electric power of the energy storage power source to battery packs for supplying power to the power tools, so that the battery packs meet the power requirement of long-time work. However, this will bring some problems.

For commercial garden tools, a common use scenario is that a team of 2-3 workers works outdoors for a day to trim the gardens of 10-20 families. Once the trimming of the garden of one family is completed, the team will go to the garden of another family and repeat the above work process until all work tasks of the day are completed. It can be seen from this that the workload of garden maintenance work is very large, and the demand for energy is very high; at the same time, the team will go to multiple work locations in one day, and often need to carry work equipment to transfer,

Therefore, for the above solution, due to the large amount of electricity required for one day's work, the energy storage power source must be set with a large amount of electricity, so the cost is inevitably high, which increases the economic pressure on the user. At the same time, due to technical limitations, the energy density of an energy storage unit is generally not high, which leads to the large weight of the energy storage power source, making it inconvenient for the user to carry and use outdoors, which is not conducive to multiple transfer operations.

In order to solve the problem that the work equipment is too heavy to be transferred, a solution is to design a plurality of energy storage power sources with relatively small weight and electric quantity, but this still cannot solve the problem of high cost. If low-cost energy storage power sources are selected as a cost reduction measure, safety problems and reliability problems may also be caused.

Therefore, the embodiment of the present application provides a different problem-solving idea. By reasonably designing a working system, this problem-solving idea can effectively avoid the above problems. The working system is light and portable, has low cost, and is more suitable for garden workers.

The inventor of the present application has keenly recognized that garden workers usually need to purchase two different types of battery packs, namely backpack battery packs and handheld battery packs, and the use scenarios of these two different types of battery packs also have seasonal differences, which will be analyzed in detail below.

The rated power of different garden tools varies greatly, which can be specifically divided into the following two categories: the first category is high-power power tools, such as lawn mowers, backpack blowers, etc.; the second category is low-power power tools, such as handheld blowers, grass trimmers, pruning shears, etc. High-power power tools and low-power power tools also have different requirements for battery packs. Generally speaking, the battery packs for supplying power to high-power power tools have a large capacity, so the weight of the battery packs for supplying power to them is also heavy, and the user needs to carry the battery packs on the back to reduce the load pressure; while the battery packs for supplying power to low-power power tools have a relatively small capacity, so the weight of the battery packs for supplying power to them is also light, and it is more portable for the user to use the battery packs by hand, and the cost is also lower. Therefore, in order to match the use requirements of power tools with different powers, users need to purchase two different types of battery packs, namely backpack battery packs and handheld battery packs.

In addition, in different seasons, the demand for garden tools varies greatly, and the corresponding demand for matching battery packs also varies greatly. For example, in spring and summer, lawns and trees grow luxuriantly, and users have a strong demand for low-power power tools such as grass trimmers and pruning shears. In autumn, the growth of lawns stops, trees begin to shed leaves, and users no longer need too many grass trimmers and pruning shears. Instead, the demand turns to high-power power tools such as backpack blowers for cleaning up fallen leaves.

However, this will lead to the problem of idle battery packs in each season. In spring and summer, users use low-power power tools most of the time, and the backpack battery packs for supplying power to high-power power tools will be idle; in autumn, users use high-power power tools most of the time, and the handheld battery packs for supplying power to low-power power tools will be idle, which will bring the problem of resource waste.

Therefore, the embodiment of the present application provides a set of working system. The backpack battery packs that are easy to be idle in the working system are used to supply power to the frequently used handheld battery packs, so that the power tools have the ability to work continuously for a long time (such as 1 day). During this period, the users of the power tools do not need to worry about insufficient power supply, and the users can effectively use the two types of battery packs in the battery pack system, thus effectively reducing the idleness of the battery packs. In addition, since the user has already purchased the backpack battery packs, the existing backpack battery packs are used to recharge the handheld battery packs, so there is no need to purchase an additional energy storage power source. Moreover, the backpack battery packs are relatively light in weight, so the working system can be light, portable and low-cost. The following is a detailed description of the working system.

Specifically, the working system includes a power supply system and a power tool system. The power supply system includes a battery pack system and an energy supply system, and the power supply system is used to provide sufficient power supply for the power tool system. The power tool system includes a first type of power tool and a second type of power tool, the first type of power tool includes garden power tools such as lawn mowers and backpack blowers, and the second type of power tool usually includes garden power tools such as handheld blowers, grass trimmers and pruning machines, which are used for garden trimming work. The battery pack system includes at least one backpack battery pack and at least one handheld battery pack, which are used to supply power to the power tool system, wherein the backpack battery pack is configured to be detachably mounted to the first type of power tool to supply power thereto, and the handheld battery pack is configured to be detachably mounted to the second type of power tool to supply power thereto. The energy supply system includes a DC charging device, which is used to convert the power of the backpack battery pack and supply it to the handheld battery pack.

When the working team carries the above working system to work outdoors, since the backpack battery pack can not only supply power to the power tools, in other words, the backpack battery pack can be used as a tool pack, and at the same time, the backpack battery pack can also be used as an energy storage pack to supply power to the handheld battery pack. This can not only solve the problem of seasonal idleness of the backpack battery packs, but also enable the handheld battery packs to be recharged in time, so as to realize the cyclic use of a small number of handheld battery packs. There is no need to carry and purchase a large number of battery packs, and the power tool system can work for a long time, thus improving the work efficiency. In addition, the backpack battery pack can be carried on the back, has a light weight, and is convenient to carry and use. Moreover, the user can use the handheld battery packs more, and the handheld battery packs can be directly mounted to the second type of power tool for use without being carried on the back, so the user can use them more conveniently and at a lower cost.

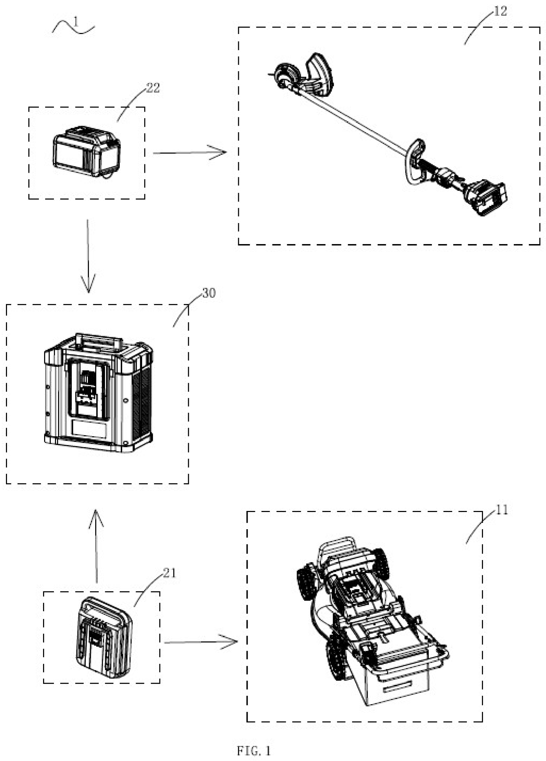

As shown in Figure 1, a typical application scenario of the above working system is as follows: when the working team goes out to work during the day, the working team carries the working system 1, and the working system 1 includes the power tool system 10, the battery pack system 20 and the energy supply system 30 required for work. The power tool system 10 includes a first type of power tool system 11 and a second type of power tool system 12, and the battery pack system 20 includes a backpack battery pack system 21 and a handheld battery pack system 22. The first type of power tool system 11 includes at least one first type of power tool, the second type of power tool system 12 includes at least one second type of power tool, the backpack battery pack system 21 includes at least one backpack battery pack, and the handheld battery pack system 22 includes at least one handheld battery pack. The backpack battery pack is configured to be detachably mounted to the first type of power tool to supply power thereto, the handheld battery pack is configured to be detachably mounted to the second type of power tool to supply power thereto, and the backpack battery pack is configured to be carried by a user.

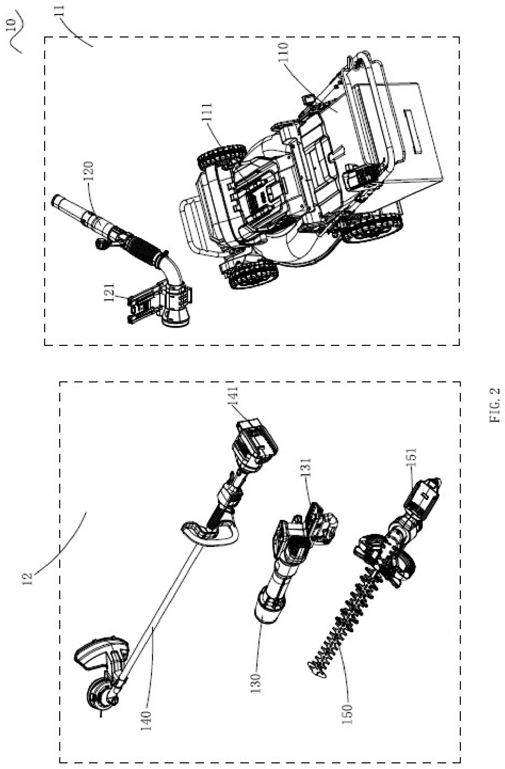

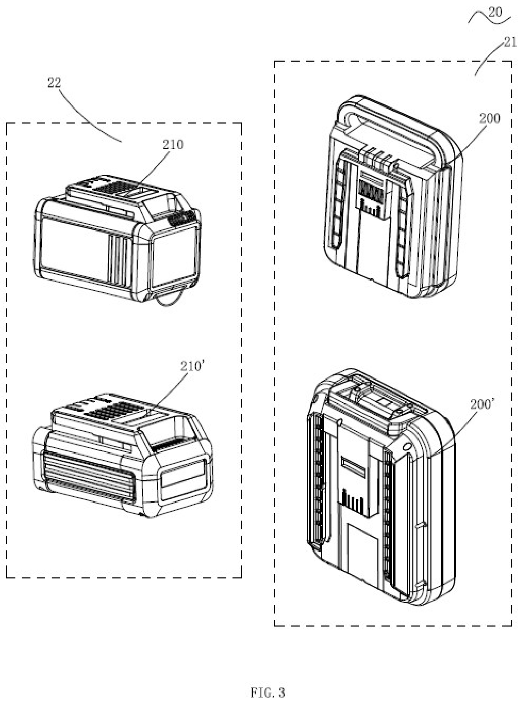

In some embodiments, as shown in Figure 2, the first type of power tool is configured as garden power tools such as a lawn mower 110 and a backpack blower 120, and the second type of power tool is configured as garden power tools such as a handheld blower 130, a grass trimmer 140 and a pruning machine 150. In some embodiments, as shown in Figure 3, the backpack battery pack system 21 includes at least one backpack battery pack 200, 200', the handheld battery pack system 22 includes at least one handheld battery pack 210, 210'; and the energy supply system 30 includes at least one DC charging device.

The power tool system 2 may include one or more first type of power tools and second type of power tools. The number of the first type of power tools and the second type of power tools may be the same or different. For example, if the work content to be performed by the power tool system is relatively simple and can be completed by one first type of power tool and one second type of power tool, only one first type of power tool and one second type of power tool may be configured for the user of the working system 1. For another example, if the work content to be performed by the power tool system 2 is diverse and requires the cooperation of multiple first type of power tools and multiple second type of power tools to complete, in this case, multiple first type of power tools and multiple second type of power tools may be configured for the user of the working system 1. The rated power of the first type of power tool is defined as the first rated power, and the rated power of the second type of power tool is defined as the second rated power, and the first rated power is greater than the second rated power.

The battery pack system 20 may include one or more backpack battery packs and handheld battery packs. The number of the backpack battery packs and the handheld battery packs may be the same or different. The battery pack system 20 may be divided into two groups: one group is working battery packs, and the other group is backup battery packs. The number of battery packs in each group may be set according to the number of power tools required to work at the same time. The working battery packs refer to the battery packs that are supplying power to the power tools, and the backup battery packs refer to the battery packs that are not supplying power to the power tools temporarily. The working battery packs may include only handheld battery packs, or may include handheld battery packs and backpack battery packs, and the backup battery packs need to include at least one handheld battery pack and at least one backpack battery pack. The backup battery packs may be the battery packs mounted on the DC charging device, or the battery packs that are neither mounted on the DC charging device nor mounted on the power tools. When the electric quantity of the handheld battery pack in the working battery packs is exhausted, it may be mounted on the DC charging device to be recharged by the backpack battery pack, and the handheld battery pack in the backup battery packs may be used as a substitute for work; when the electric quantity of the backpack battery pack in the working battery packs is exhausted, the backpack battery pack in the backup battery packs may be used as a substitute for work.

As an optional method, the number of the working battery packs may be the same as the number of power tools working at the same time. The number of the backup battery packs is the same as the number of the working battery packs, or the number of the backup battery packs may be more than the number of the working battery packs, so as to prevent the situation that the number of the backup battery packs cannot support the continuous work of the power tools when one of the working battery packs is damaged. For example, the working team usually has 2 people. When they arrive at a garden to work, one worker uses the lawn mower 110 to mow the lawn, and during the lawn mowing period, the other worker uses the handheld power tools to complete other types of work in sequence, such as the other worker first trims the grass, then prunes the branches, and then blows the grass, and the two workers almost complete all the work at the same time. Therefore, there are two power tools working at the same time. When configuring the number of battery packs in the battery pack system, two working battery packs and three or four backup battery packs may be configured. The above battery pack configuration method is only an example, and the user may configure according to the type of the power tools in actual use, with the minimum number of battery packs that can be used alternately without interruption.

As another optional method, the number of the working battery packs may be set according to the number of power tools of the power tool system. Preferably, the number of the working battery packs is the same as the number of power tools in the power tool system, and the number of the backup battery packs may be equal to the number of the working battery packs. When the working team goes out to work, the user may pre-install battery packs for each carried power tool, so that when switching from one power tool to another, there is no need to install the battery pack, and the power tool can be used directly, which is more in line with the usage habits of the staff when using traditional fuel tools. For example, before the working team arrives at a garden to work, they may pre-install a battery pack for each of the lawn mower 110, the backpack blower 120, the handheld blower 130, the grass trimmer 140 and the pruning machine 150. When one worker uses the lawn mower 110 to mow the lawn, the other worker uses the grass trimmer 140 to trim the grass. After the grass trimming work is completed, the worker can directly use the pruning machine 150 to prune the branches without installing a battery pack for the pruning machine 150; after the pruning work is completed, the worker can directly use the backpack blower 120 or the handheld blower 130 to blow the grass without installing a battery pack for the backpack blower 120 or the handheld blower 130.

It should be noted that when there are multiple (greater than or equal to 2) backpack battery packs and handheld battery packs in the battery pack system, the multiple backpack battery packs all have the same interface for mounting to the first tool interface and the input interface. The multiple backpack battery packs may all be of the same type, or all of different types, or some of the backpack battery packs are of the same type and some are of different types. Similarly, the multiple handheld battery packs all have the same interface for mounting to the second type of power tool. The multiple handheld battery packs may also all be of the same type, or all of different types, or some of the handheld battery packs are of the same type and some are of different types. The "different types of battery packs" mentioned here refer to the difference in one or more of the capacity of the single cell, the type of the single cell, the internal structure of the battery pack, the shape of the battery pack, etc. In some embodiments, as shown in Figure 3, the backpack battery pack system 21 includes two types of backpack battery packs 200 and 200', and the handheld battery pack system 22 includes two types of handheld battery packs 210 and 210', wherein the two types of backpack battery packs 200 and 200' are different in capacity, type of single cell, internal structure and shape of the battery pack, and the two types of handheld battery packs 210 and 210' are also different in capacity, type of single cell, internal structure and shape of the battery pack.

The energy supply system includes X DC charging devices, where X is a positive integer not less than 1. The working team may carry one or more DC charging devices according to work needs to complete the required power conversion.

The following first introduces the specific structure and application scenario of the installation of the backpack battery pack and the handheld battery pack in the battery pack system with the power tool system when they are used as tool packs.

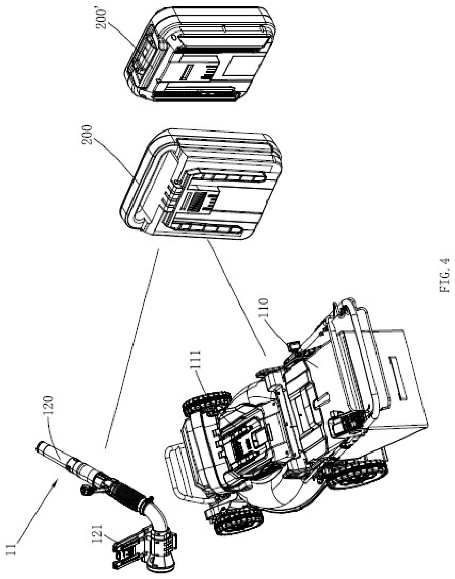

The backpack battery pack is configured to be mounted to the first type of power tool to supply power to the first type of power tool, wherein the backpack battery pack is configured to be carried by a user. Specifically, the first type of power tool includes a first tool interface, and the backpack battery pack is configured to be detachably mounted to the first tool interface. In some embodiments, as shown in Figure 4, the first type of power tool system 11 includes two types of first type of power tools, namely a lawn mower 110 and a backpack blower 120, wherein the lawn mower 110 includes a first tool interface 111, the backpack blower 120 includes a first tool interface 121, the first tool interfaces 111 and 121 have the same structure, and the backpack battery packs 200 and 200' can be detachably mounted to the first tool interfaces 111 and 121.

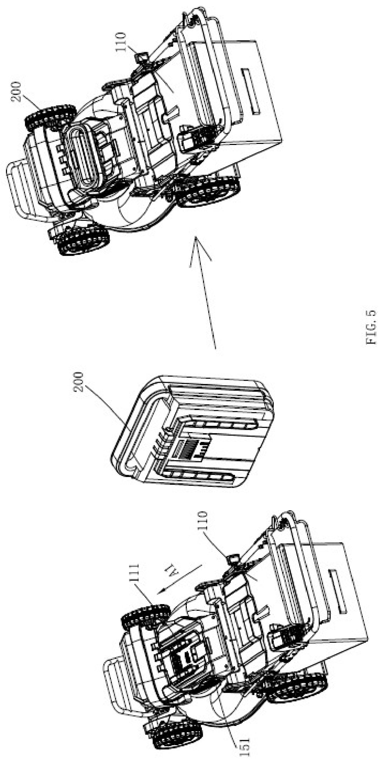

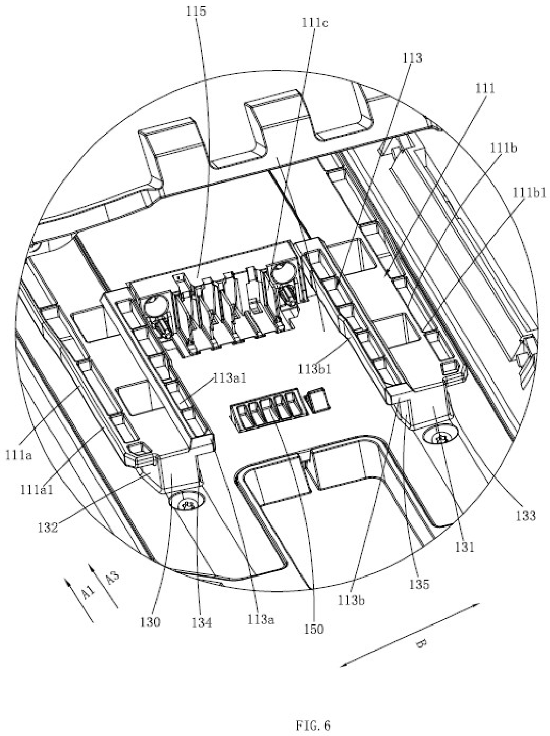

Taking the installation of the backpack battery pack 200 and the lawn mower 110 as an example, as shown in Figures 5 and 6, the first tool interface 111 includes a pair of first guide portions 111a, 111b extending along a first sliding direction A1, and the first guide portions 111a, 111b are used to guide the backpack battery pack 200 to be slidably mounted to the lawn mower 110 along the first sliding direction A1. Of course, the backpack battery pack 200 can also be slidably removed from the lawn mower 110 along the direction opposite to the first sliding direction A1.

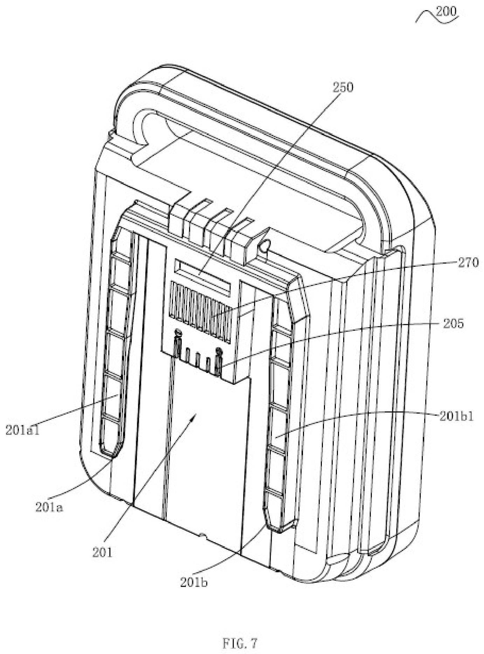

Correspondingly, as shown in Figure 7, the backpack battery pack 200 includes a backpack battery pack interface 201, the backpack battery pack interface 210 includes a pair of first matching portions 201a, 201b, and the pair of first matching portions 201a, 201b are used to cooperate with the pair of first guide portions 111a, 111b respectively to realize the sliding connection between the lawn mower 110 and the backpack battery pack 200.

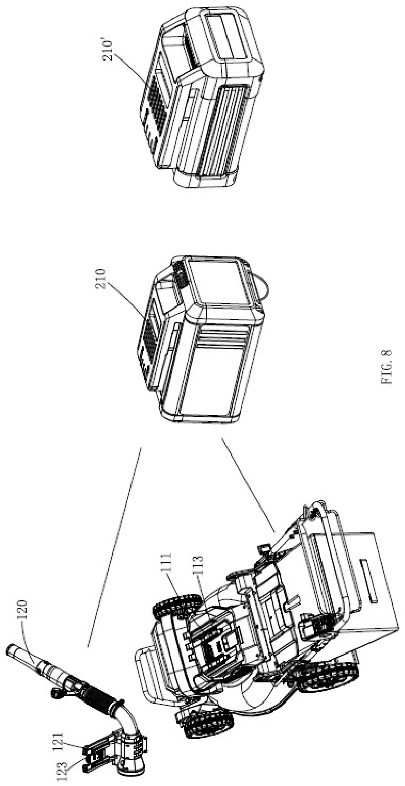

In some embodiments, the handheld battery pack is also configured to be detachably mounted to the first type of power tool, so that the handheld battery pack supplies power to the first type of power tool. The first type of power tool can be adapted to the backpack battery pack and the handheld battery pack with two different interfaces, which is beneficial to realize the universality of the battery pack system. When the electric quantity of the backpack battery pack in the working battery packs is exhausted, the backpack battery pack in the backup battery packs can be used to supply power to the first type of power tool, and the handheld battery pack in the backup battery packs can also be used to supply power to the first type of power tool. In some embodiments, as shown in Figure 8, the handheld battery packs 210 and 210' can be detachably mounted to the lawn mower 110 and the backpack blower 120, so that the handheld battery packs 210 and 210' supply power to the lawn mower 110 and the backpack blower 120.

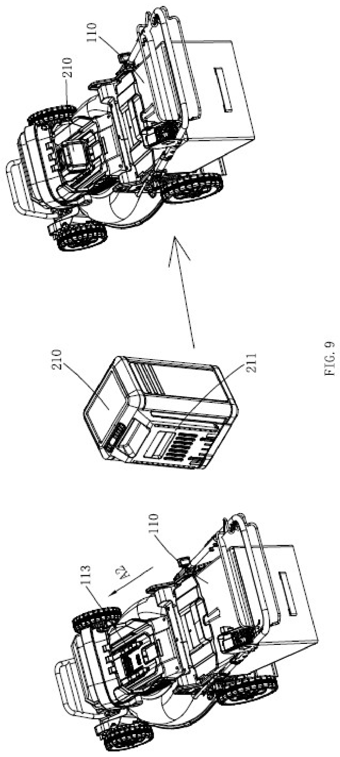

In some embodiments, the first type of power tool further includes a third tool interface, and the third tool interface is configured to detachably mount the handheld battery pack, so that the handheld battery pack supplies power to the first type of power tool. As shown in Figure 9, taking the installation of the handheld battery pack 210 and the lawn mower 110 as an example, the lawn mower 110 further includes a third tool interface 113, and the handheld battery pack 210 is detachably mounted to the third tool interface 113 to supply power to the lawn mower 110.

Specifically, as shown in Figure 6, the third tool interface 113 includes a pair of third guide portions 113a, 113b extending along a third sliding direction A3, and the third guide portions 113a, 113b are used to guide the handheld battery pack 210 to be slidably mounted to the lawn mower 110 along the third sliding direction A3. Of course, the handheld battery pack 210 can also be slidably removed from the lawn mower 110 along the direction opposite to the third sliding direction A3. In this embodiment, the third sliding direction A3 is parallel to the first sliding direction A1.

Further, the pair of first guide portions 111a, 111b and the pair of third guide portions 113a, 113b are independent of each other, and in the width direction perpendicular to the up-down direction, the pair of first guide portions 111a, 111b are located on both sides of the pair of third guide portions 113a, 113b. This arrangement reduces the size of the first tool interface and the third tool interface, which is beneficial to realize the miniaturization of the first type of power tool. It should be noted that "the pair of first guide portions and the pair of third guide portions are independent of each other" can be understood as that the functions of the pair of first guide portions and the pair of third guide portions are independent of each other, in other words, the function of the pair of first guide portions 111a, 111b for guiding the backpack battery pack 200 to be mounted to the lawn mower 110 along the first sliding direction A1 and the function of the pair of third guide portions 113a, 113b for guiding the handheld battery pack 210 to be mounted to the lawn mower 110 along the third sliding direction A3 do not overlap with each other.

In addition, "the pair of first guide portions 111a, 111b are located on both sides of the pair of third guide portions 113a, 113b" can be understood as that one 111a of the pair of first guide portions is located on the outer side of one 113a of the pair of third guide portions, the other 111b of the pair of first guide portions is located on the outer side of the other 113b of the pair of third guide portions, and in the width direction B perpendicular to the first sliding direction A1 and the third sliding direction A3, the distance between the pair of first guide portions 111a, 111b is greater than the distance between the pair of third guide portions 113a, 113b.

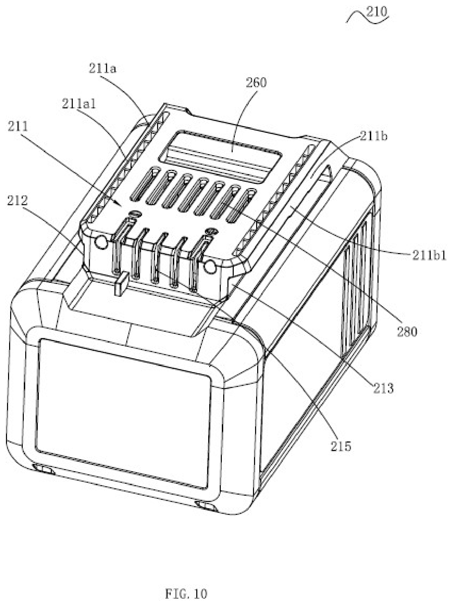

As shown in Figure 6, the pair of first guide portions 111a, 111b are arranged back to back, and the pair of third guide portions 113a, 113b are arranged face to face. Based on this arrangement, the pair of first guide portions 111a, 111b are configured as a pair of outer guide rails, the pair of third guide portions 113a, 113b are configured as a pair of inner guide rails, and correspondingly, as shown in Figures 7 and 10, the pair of first matching portions 201a, 201b are configured as a pair of inner guide grooves, and the pair of second matching portions 211a, 211b are configured as a pair of outer guide grooves.

Of course, those skilled in the art can also arrange the pair of first guide portions face to face, i.e., configured as a pair of inner guide rails, and arrange the pair of second guide portions back to back, i.e., configured as a pair of outer guide rails, and correspondingly, configure the pair of first matching portions as a pair of outer guide grooves and the pair of second matching portions as a pair of inner guide grooves; or configure both the pair of first guide portions and the pair of second guide portions as a pair of outer guide rails, and correspondingly, configure both the pair of first matching portions and the pair of second matching portions as a pair of inner guide grooves; or configure both the pair of first guide portions and the pair of second guide portions as a pair of inner guide rails, and correspondingly, configure both the pair of first matching portions and the pair of second matching portions as a pair of outer guide grooves. The present application does not limit the arrangement forms of the first guide portions, the second guide portions, the first matching portions and the second matching portions.

Since the volume of the backpack battery pack is usually larger than that of the handheld battery pack, the maximum size of the first guide portions 111a, 111b in the first sliding direction A1 is larger than the maximum size of the third guide portions 113a, 113b in the third sliding direction A3; similarly, the maximum size of the first matching portions 201a, 201b in the first sliding direction A1 is larger than the maximum size of the second matching portions 211a, 211b in the third sliding direction A3.

Further, the lawn mower 110 further includes a first support portion 130 and a second support portion 131, the pair of first guide portions 111a, 111b include a pair of first extension portions 111a1, 111b1 extending along the first sliding direction A1, the pair of second guide portions 113a, 113b include a pair of second extension portions 113a1, 113b1 extending along the third sliding direction A3, the first extension portion 111a1 protrudes from the outer side of the first support portion 130 in the width direction, the first extension portion 111b1 protrudes from the outer side of the second support portion 131 in the width direction B, the second extension portion 113a1 protrudes from the inner side of the first support portion 130 in the width direction B, and the second extension portion 113b1 protrudes from the inner side of the second support portion 131 in the width direction.

In other words, one 111a1 of the pair of first extension portions and one 113a1 of the pair of second extension portions share the first support portion 130, and the other 111b1 of the pair of first extension portions and 113b1 of the pair of second extension portions share the second support portion 131. This arrangement can make the layout of the first tool interface compact, thereby reducing the space occupied by the first tool interface, and thus reducing the volume of the power tool.

It should be noted that the outer sides of the first support portion 130 and the second support portion 131 refer to the sides of the first support portion 130 and the second support portion 131 that are far away from the center line of the pair of first guide portions 110a, 110b and the pair of second guide portions 120a, 120b, and the inner sides of the first support portion 130 and the second support portion 131 refer to the sides of the first support portion 130 and the second support portion 131 that are close to the center line of the pair of first guide portions and the pair of second guide portions.

Further, the first guide portion 111a further includes an outer side wall 132 of the first support portion 130, and the first guide portion 111b further includes an outer side wall 133 of the second support portion 131. Correspondingly, as shown in Figure 7, the first matching portion 201a includes an inner side wall (not shown) matched with the first extension portion 111a, and a first contact part 201a1 matched with the outer side wall 132, and the first matching portion 201b includes an inner side wall (not shown) matched with the first extension portion 111b, and a first contact part 201b1 matched with the outer side wall 133. Thus, when the backpack battery pack 200 is slidably matched with the lawn mower 110 along the first sliding direction A1, the first extension portion 111a1, the outer side wall 132, the second extension portion 111b1 and the outer side wall 133 together form the guidance and limit for the backpack battery pack 200.

Similarly, the second guide portion 113a further includes an inner side wall 134 of the first support portion 130, and the second guide portion 113b further includes an inner side wall 135 of the second support portion 131. Correspondingly, as shown in Figure 10, the second matching portion 211a includes an outer side wall 212 matched with the second extension portion 113a1, and a second contact part 211a1 matched with the inner side wall 134, and the second matching portion 211b includes an outer side wall 213 matched with the second extension portion 113b1, and a second contact part 211b1 matched with the inner side wall 134. Thus, when the handheld battery pack 210 is slidably matched with the lawn mower 110 along the second sliding direction A2, the second extension portion 113a1, the inner side wall 134, the second extension portion 113b1 and the inner side wall 135 together form the guidance and limit for the handheld battery pack 210.

In some embodiments, the lawn mower 110 further includes a plurality of first tool terminals 111c located between the pair of second guide portions 120a, 120b, the first tool terminals 111c are evenly distributed along the width direction B, and correspondingly, the backpack battery pack 200 includes a plurality of backpack battery pack terminals (not shown) located between the first matching portions 201a, 201b, and the handheld battery pack 210 includes a plurality of handheld battery pack terminals (not shown) located between the second matching portions 211a, 211b. When the backpack battery pack 200 is matched with the lawn mower 110, the first tool terminals 111c are used to be electrically connected with the corresponding backpack battery pack terminals to realize the power transmission between the backpack battery pack 200 and the lawn mower 110; when the handheld battery pack 210 is matched with the lawn mower 110, the first tool terminals 111c are used to be electrically connected with the corresponding handheld battery pack terminals to realize the power transmission between the handheld battery pack 210 and the lawn mower 110.

It should be noted that the first tool terminals, the backpack battery pack terminals and the handheld battery pack terminals can be set in any form easily thought of by those skilled in the art, and the present application will not be repeated here.

Both the backpack battery pack and the handheld battery pack can be matched with the first tool terminals, so that the structure is simple and compact, which is beneficial to realize the miniaturization of the first type of power tool.

The lawn mower 110 is provided with a terminal base 115, and the first tool terminals 111c are at least partially mounted on the terminal base 115. Correspondingly, as shown in Figure 7, the backpack battery pack 200 is provided with a plurality of first terminal grooves 205 located between the pair of first matching portions 201a, 201b, and each backpack battery pack terminal is at least partially accommodated in the corresponding first terminal groove 205; as shown in Figure 10, the handheld battery pack 210 is provided with a plurality of second terminal grooves 215 located between the pair of second matching portions 211a, 211b, and each handheld battery pack terminal is at least partially accommodated in the corresponding second terminal groove 215.

As shown in Figure 6, the lawn mower 110 further includes a locking element 150 located between the pair of second guide portions 113a, 113b, and correspondingly, as shown in Figure 7, the backpack battery pack 200 includes a first locking portion 250 located between the pair of first matching portions 201a, 201b, and as shown in Figure 10, the handheld battery pack 210 includes a second locking portion 260 located between the pair of second matching portions 211a, 211b. When the backpack battery pack 200 is matched with the lawn mower 110, the locking element 150 is used to cooperate with the first locking portion 250 to lock the backpack battery pack 200 and the lawn mower 110; when the handheld battery pack 210 is matched with the lawn mower 110, the locking element 150 is used to cooperate with the second locking portion 260 to lock the handheld battery pack 210 and the lawn mower 110.

When matching with the first type of power tool, both the backpack battery pack and the handheld battery pack can share the locking element 150, so that the structure is simple and compact, which is beneficial to realize the miniaturization of the first type of power tool.

In this embodiment, the locking element 150 is configured as a latch, and the first locking portion 250 and the second locking portion 350 are configured as slots matched with the latch. Of course, the locking element, the first locking portion and the second locking portion can also be set in other forms, such as the locking element is set as a slot, and the first locking portion and the second locking portion are set as latches matched with the slot, which is not limited by the present application.

Further, as shown in Figure 5, the lawn mower 110 further includes a trigger element 151, the trigger element 151 can drive the locking element 150 to move from a locking position to an unlocking position, when the locking element 150 is in the locked position, the locking element 150 cooperates with the first locking portion 250 or the second locking portion 350 to lock the lawn mower 110 and the backpack battery pack 200 or the handheld battery pack 210; when the locking element 150 is in the unlocked position, the locking element 150 is disengaged from the first locking portion 250 or the second locking portion 260, and the lawn mower 110 is unlocked from the backpack battery pack 200 or the handheld battery pack 210. In this embodiment, the trigger element 151 is configured as a button.

In the above embodiment, the backpack battery pack 200 or the handheld battery pack 210 is directly mounted to the lawn mower 110, and the user does not need to carry the battery pack on the back when the lawn mower 110 works.

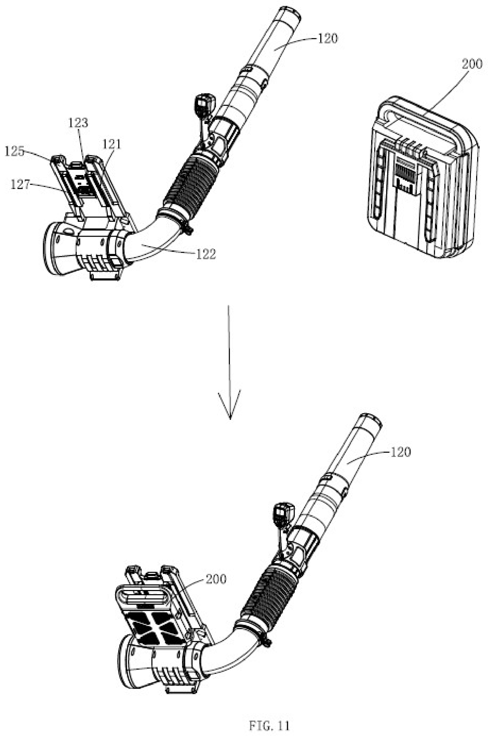

In other embodiments, when the first type of power tool works, the user needs to carry the battery pack on the back to facilitate use and carrying. Taking the installation of the backpack battery pack 200 and the backpack blower 120 as an example, as shown in Figure 11, the backpack blower 120 further includes a main body 122 and a backpack frame 125 connected with the main body, the backpack frame 125 is configured for a user to carry the backpack blower 120, and the backpack battery pack 120 is configured to be detachably mounted to the backpack frame 125, so that the backpack battery pack 200 supplies power to the backpack blower 120.

Specifically, the backpack frame 125 is arranged at one end of the main body 122 and is detachably connected or fixedly connected with the main body 122. The backpack frame 123 includes a support plate 127, and a shoulder strap (not shown) and/or a waist belt (not shown) connected with the support plate 127, which can be carried by the user. The backpack frame 125 is provided with a first tool interface 121, and the first tool interface 121 is arranged on the support plate 127. When the user needs to use the backpack blower 120, the backpack battery pack 200 can be mounted to the backpack frame 125, and the user can carry the backpack blower 120 by means of the backpack frame 125. The battery pack is carried by the user's back and/or waist, so as to reduce the force on the user's hands and enable the user to use it more comfortably.

In order to realize the alternate power supply of the battery pack system, in some embodiments, the backpack frame 125 is also provided with a third tool interface 123, and the handheld battery packs 210 and 210' can be detachably mounted to the third tool interface 123, so that the handheld battery packs 210 and 210' supply power to the backpack blower 120.

Specifically, the structure of the first tool interface 121 can refer to the structure of the first tool interface 141, and the structure of the third tool interface 123 can refer to the structure of the third tool interface 113, which will not be repeated here.

Further, in order to make the structure of the backpack frame compact, the positional relationship between the first tool interface 121 and the third tool interface 123 is also the same as the positional relationship between the first tool interface 111 and the third tool interface 113, which will not be repeated here.

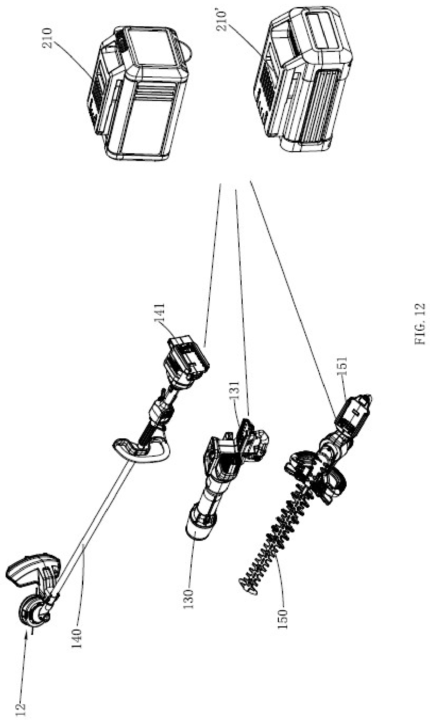

The second type of power tool includes a second tool interface, and the handheld battery pack is configured to be detachably mounted to the second tool interface to realize that the handheld battery pack supplies power to the second type of power tool. In some embodiments, as shown in Figure 12, the second type of power tool system 12 includes three types of second type of power tools, namely a handheld blower 130, a grass trimmer 140 and a pruning machine 150, wherein the handheld blower 130 includes a second tool interface 131, the grass trimmer 140 includes a second tool interface 141, the pruning machine 150 includes a second tool interface 151, the second tool interfaces 131, 141 and 151 have the same shape, and the handheld battery packs 210 and 210' can be detachably mounted to the second tool interfaces 131, 141 and 151.

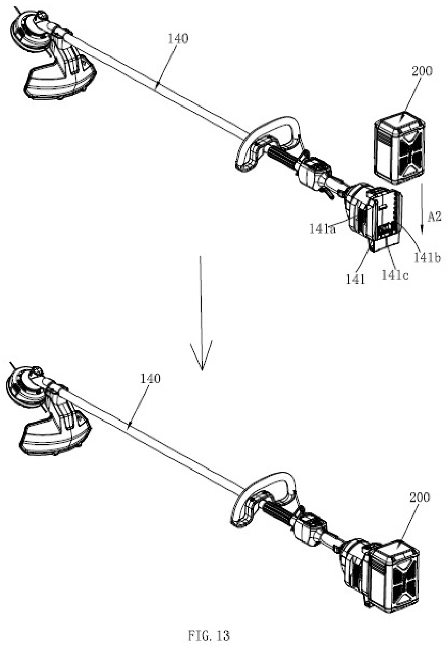

Taking the installation of the handheld battery pack 210 and the grass trimmer 140 as an example, as shown in Figure 13, the second tool interface 141 includes a pair of second guide portions 141a, 141b extending along a second sliding direction A2, and the second guide portions 141a, 141b are used to guide the handheld battery pack 210 to be slidably mounted to the grass trimmer 140 along the second sliding direction A2. Of course, the handheld battery pack 210 can also be slidably removed from the grass trimmer 140 along the direction opposite to the second sliding direction A2.

The structure of the second tool interface 141 is basically the same as that of the third tool interface 113, which will not be repeated here. Correspondingly, as shown in Figure 10, the pair of second matching portions 211a, 211b are used to cooperate with the pair of second guide portions 141a, 141b respectively to realize the installation of the grass trimmer 140 and the handheld battery pack 210.

It should be noted that the first tool interface, the second tool interface, the third tool interface, the backpack battery pack interface and the handheld battery pack interface can also be in other matching forms, as long as the connection between the battery pack and the power tool can be satisfied.

Further, the second tool interface further includes a plurality of second type of power tool terminals for electrical connection with the handheld battery pack. Taking the grass trimmer 140 as an example, the second tool interface 141 includes a plurality of second type of power tool terminals 141c, and in the direction perpendicular to the second sliding direction A2, the second type of power tool terminals 141c are located between the pair of second guide portions 141a, 141b. Correspondingly, the handheld battery pack terminals (not shown) are used to connect with the second type of power tool terminals 141c, so as to realize the electrical connection between the handheld battery pack and the second type of power tool.

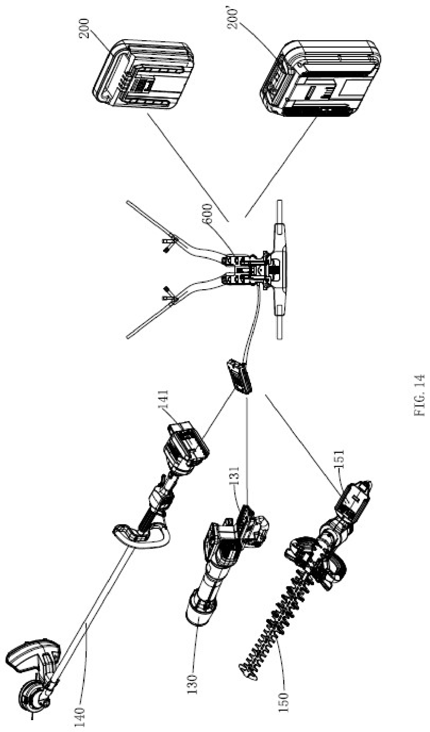

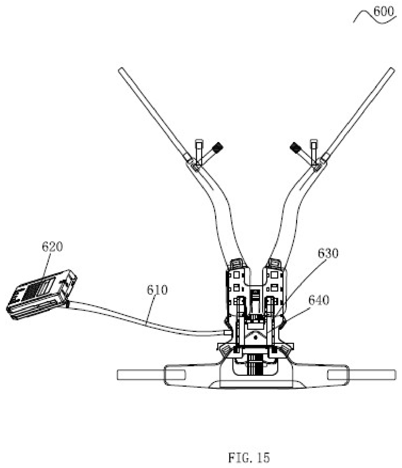

In some embodiments, the backpack battery pack can also supply power to the second type of power tool to realize the universality of the battery pack. As shown in Figures 14 and 15, the backpack battery packs 200 and 200' can supply power to the handheld blower 130, the grass trimmer 140 and the pruning machine 150. Taking the backpack battery pack 200 supplying power to the grass trimmer 140 as an example, as shown in Figure 15, the power supply system further includes a carrying device 600, the carrying device 600 is configured to be carried by a user, the carrying device 600 includes a cable 610, and a plug interface 620 and a first carrying interface 630 connected by the cable 610, the first carrying interface 630 is configured to detachably mount the backpack battery pack 200, the plug interface 620 is configured to detachably connect the second tool interface 141, and when the second tool interface 141 is connected to the plug interface 620 and the backpack battery pack 200 is mounted to the first carrying interface 630, the backpack battery pack 200 supplies power to the grass trimmer 140.

The structure of the plug interface 620 is configured to be basically the same as the structure of the handheld battery pack interface 211, and the structure of the first carrying interface 630 is configured to be basically the same as the structure of the first tool interface 111, which will not be repeated here.

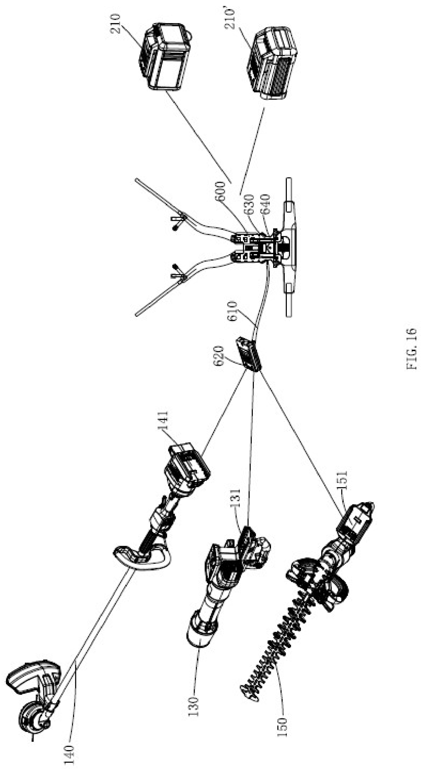

In some embodiments, in order to meet the needs of some users who prefer to carry the battery pack on the back, the handheld battery pack can also supply power to the second type of power tool through the carrying device. As shown in Figure 16, the handheld battery packs 210 and 210' can supply power to the handheld blower 130, the grass trimmer 140 and the pruning machine 150 through the carrying device 600. Taking the handheld battery pack 210 supplying power to the grass trimmer 140 through the carrying device 600 as an example, as shown in Figure 15, the carrying device 600 includes a second carrying interface 640, the second carrying interface 640 is configured to detachably mount the handheld battery pack 210, the plug interface 620 is configured to detachably connect the second tool interface 640, and when the grass trimmer 140 is connected to the plug interface 620 and the handheld battery pack 210 is mounted to the second carrying interface 640, the handheld battery pack 210 supplies power to the grass trimmer 140. The structure of the second carrying interface 640 is configured to be basically the same as the structure of the second tool interface 141, which will not be repeated here. By arranging the first carrying interface for mounting the backpack battery pack and the second carrying interface for mounting the handheld battery pack on the carrying device, there is no need to additionally arrange a new carrying device, which can save costs and reduce the carrying pressure.

Further, in order to make the structure of the carrying device compact, the positional relationship between the first carrying interface 630 and the second carrying interface 640 is also the same as the positional relationship between the first tool interface 111 and the third tool interface 113, which will not be repeated here.

Since the weight of commercial garden power tools is usually relatively large, directly connecting the battery pack to the power tool will cause the user to bear too much weight. The backpack battery pack and/or the handheld battery pack are detachably mounted to the carrying device through the carrying device, so that the user can be convenient and laborsaving during the work process.

In order to make the working system as light as possible while meeting the requirement that the backpack battery pack can be carried on the back, in some embodiments, the weight range of a single backpack battery pack is set to 4-12 Kg, and optionally, the weight of a single backpack battery pack is set to 5-10 Kg, such as 5 Kg, 8 Kg, 10 Kg or others.

Similarly, in order to avoid that the volume is too large to affect use and carrying, in some embodiments, the volume range of a single backpack battery pack is set to 3-20 L, and optionally, the weight of a single backpack battery pack is set to 5-15 L, such as 5 L, 10 L, 15 L or others.

As mentioned earlier, the backpack battery pack needs to be used not only as a tool pack to supply power to the power tools, but also as an energy storage pack to supply power to the handheld battery pack. The following details the use requirements of the backpack battery pack as an energy storage pack.

Since the backpack battery pack needs to be used as an energy storage pack to charge the handheld battery pack, the backpack battery pack needs to have sufficient electric quantity. In some embodiments, the rated electric quantity range of a single backpack battery pack is set to 550-3000Wh. Optionally, the rated electric quantity of a single backpack battery pack is set to 1000-2000Wh, such as 1000Wh, 1500Wh, 2000Wh or others.

Since the weight of the backpack battery pack should not be too large and it needs sufficient electric quantity, the backpack battery pack needs to store enough electric quantity per unit mass. In some embodiments, the ratio range of the rated electric quantity to the weight of a single backpack battery pack is set to 60-300Wh/Kg. Optionally, the ratio range of the rated electric quantity to the weight of a single backpack battery pack is set to 80-200Wh/Kg, such as 80Wh/Kg, 100Wh/Kg, 200Wh/Kg or others.

Similarly, the volume of the backpack battery pack should not be too large and it needs sufficient electric quantity, so the backpack battery pack needs to store enough electric quantity per unit volume. In some embodiments, the ratio range of the rated electric quantity to the volume of a single backpack battery pack is set to 40-220Wh/L. Optionally, the ratio range of the rated electric quantity to the volume of a single backpack battery pack is set to 60-150Wh/L, such as 60Wh/L, 100Wh/L, 150Wh/L or others.

As mentioned earlier, since the working system needs to meet the power supply requirement for a long time, the handheld battery pack needs to be fully charged as soon as possible after its electric quantity is exhausted for cyclic use. In order to charge the handheld battery pack quickly, the backpack battery pack needs to provide a large output power to the handheld battery pack. Limited by technology and weight, the electric quantity stored in the backpack battery pack is limited. Since the discharge rate of the battery pack is the ratio ry pack is the ratio of the output power of the battery pack to the rated electric quantity of the battery pack, that is, the larger the output power of the battery pack, the larger the discharge rate of the battery pack. Therefore, the backpack battery pack needs to discharge to the handheld battery pack at a large discharge rate. In some embodiments, the discharge rate of the backpack battery pack is greater than or equal to 2C. Optionally, the discharge rate of the backpack battery pack is set to 4-10C, such as 4C, 5C, 10C or others.

The backpack battery pack used to recharge the handheld battery pack needs to have a large output power to support charging the handheld battery pack at a large discharge rate. In some embodiments, the maximum output power of the backpack battery pack is greater than or equal to 2 Kw. Optionally, the maximum output power of the backpack battery pack is set to 2-3.5 Kw, such as 2 Kw, 2.5 Kw, 3 Kw, 3.5 Kw or others.

To enable the backpack battery pack to support high-power discharge, the single cell in the backpack battery pack also needs to support high-rate discharge. In one embodiment, the discharge rate range of the single cell in the backpack battery pack is 1.5C-3C. For example, the discharge rate of the single cell in the backpack battery pack can be set to 2C.

Further, the continuous discharge rate of the backpack battery pack is not less than 1C, that is, during the continuous discharge process of the backpack battery pack from the remaining electric quantity greater than or equal to 90% to the remaining electric quantity at least less than or equal to 10%, the discharge rate is not less than 1C. Thus, the backpack battery pack can support a large output power to charge the handheld battery pack quickly.

If the internal resistance of the single cell of the backpack battery pack is too large, the discharge rate of the backpack battery pack will be affected; if the internal resistance of the single cell of the backpack battery pack is too small, the cost will be greatly increased. Optionally, the internal resistance range of the single cell of the backpack battery pack is greater than or equal to 10mΩ and less than or equal to 25mΩ, such as 10mΩ, 15mΩ, 20mΩ or others.

In actual work, the application scenario of the backpack battery pack as an energy storage pack is far more than that as a tool pack. Therefore, there is no excessive requirement for the cyclic use of the backpack battery pack. That is, the requirement for the real-time performance of charging the backpack battery pack is relatively low. Therefore, in some embodiments, the charging rate of the single cell in the backpack battery pack can be set lower, thereby reducing the cost of the single cell. For example, setting the charging rate of the single cell in the backpack battery pack to be lower than the charging rate of the single cell in the handheld battery pack can enable the two types of cells to be used in cooperation, thereby reducing the cell cost of the power supply system. Optionally, the charging rate range of the single cell in the backpack battery pack is 0.2C-1C, for example, the charging rate of the single cell in the backpack battery pack can be set to 0.75C.

In order to enable the backpack battery pack to support high-power discharge when used as an energy storage pack and to match the working voltage (or voltage platform) of the power tool when used as a tool pack, the rated voltage of the backpack battery pack is not less than 40V. In one embodiment, the rated voltage of the backpack battery pack is set to 54V.

To meet the work requirements, the capacity of the single cell in the backpack battery pack is not less than 4AH. In some embodiments, the capacity of the single cell in the backpack battery pack is 5AH, and the number of single cells in the backpack battery pack is 75. The rated voltage of each single cell is 3.6V. 5 single cells are connected in parallel to form a string of cell groups, and 15 strings of cell groups are connected in series to output 54V.

As mentioned earlier, the handheld battery pack needs to be used frequently as a tool pack, and its power needs to be fully charged as soon as possible for cyclic use. The following details the use requirements of the handheld battery pack to meet cyclic use.

In order to realize the continuous use of the handheld battery pack, the time required for the handheld battery pack to be charged from an empty state to a full state is less than the time required for the handheld battery pack to be discharged from the full state to an empty state. In some embodiments, the average charging power of the DC charging device for the handheld battery pack is greater than the average discharge power of the second type of power tool for the handheld battery pack. It should be noted that the "empty state" of the battery pack refers to the remaining electric quantity of the battery pack being less than or equal to 5%, and the "full state" of the battery pack refers to the remaining electric quantity of the battery pack being greater than or equal to 95%.

In order to improve the charging speed of the handheld battery pack, the handheld battery pack can be equipped with single cells with a large charging rate, so that the handheld battery pack can be charged at a large rate. In one embodiment, the maximum allowable charging rate of the single cell in the handheld battery pack is not less than 7C. Optionally, the maximum allowable charging rate of the single cell in the handheld battery pack is set to 7-12C, such as 7C, 10C, 12C or others.

In addition, in order to meet the power supply requirement for high-power power tools, the handheld battery pack also needs to be equipped with single cells with a large discharge rate, so that the handheld battery pack can be discharged at a large rate. In some embodiments, the discharge rate range of the single cell in the handheld battery pack is not less than 5C. Optionally, the discharge rate of the single cell in the handheld battery pack is set to 5-10C, such as 5C, 7C, 10C or others.

The rated voltage (or voltage platform) of the handheld battery pack can be designed according to the working voltage (or voltage platform) of the power tool. The rated voltage of the handheld battery pack generally needs to match the working voltage of the power tool. In some embodiments, the rated voltage of the handheld battery pack can be designed to be relatively high, for example, not less than 40V. In some embodiments, the rated voltage of the handheld battery pack is also set to 54V. When the discharge rate is constant, designing the rated voltage of the handheld battery pack to be relatively high can increase the discharge power of the handheld battery pack, thereby enabling the power tool to work at a larger power.

The maximum charge-discharge cycle times of large-capacity battery packs on the market are generally less than 1000 times, and the maximum charge-discharge cycle times of common large-capacity battery packs are 300-500 times. The low number of charge-discharge cycles will lead to a short service life of the battery pack, which needs to be replaced frequently, which undoubtedly increases the use cost of the working system. Taking garden trimming work as an example, if a large-capacity battery pack with a maximum of 300-500 charge-discharge cycles is used, the battery pack needs to be purchased new after at most a few months, which obviously leads to a high cost of the working system.

In order to solve the above problem, in some embodiments, the maximum charge-discharge cycle times of the single cell in the handheld battery pack are designed to be not less than 1000 times to ensure the service life of the handheld battery pack. Even if a battery pack needs to complete 3 charge-discharge cycles a day, 1000 charge-discharge cycles can enable the battery pack to have a service life of one year, thus meeting the use requirements of the garden team.

In some embodiments, assuming that the time required for a single handheld battery pack to be charged from an empty state to a full state is t1, and the time required for a single handheld battery pack to be discharged from the full state to an empty state is t2, then t1 ≤ t2. In this way, the user can use the handheld battery pack continuously, thereby improving work efficiency. Further, assuming that the waiting time for the handheld battery pack to enter the discharge state after the end of charging is t3, and the waiting time for the handheld battery pack to enter the charging state after the end of discharge is t4. Then t1 + t3 + t4 ≤ t2. It should be noted that if the temperature of the handheld battery pack is too high after the end of charging, it may be necessary to wait for the temperature of the handheld battery pack 210 to drop before starting the discharge process of the handheld battery pack, so the waiting time t3 will occur. If the temperature of the handheld battery pack is too high after the end of discharge, it may be necessary to wait for the temperature of the handheld battery pack to drop before starting the charging process of the handheld battery pack, so the waiting time t4 will occur. In addition, if a perfect thermal management system is adopted during the charging process, t3 can be 0, that is, the user does not need to wait, and the handheld battery pack can be discharged directly after the end of charging. If a perfect thermal management system is adopted during the discharge process, t4 can be 0, that is, the user does not need to wait, and the handheld battery pack can be charged directly after the end of discharge.

In order to minimize the charging waiting time t3 as much as possible, in some embodiments, when the handheld battery pack is charged at a rate of 3C, the temperature rise of the handheld battery pack does not exceed 14°C at an ambient temperature of about 20°C; and/or when the handheld battery pack is charged at a rate of 5C, the temperature rise of the handheld battery pack does not exceed 19°C at an ambient temperature of about 20°C; and when the handheld battery pack is charged at a rate of 10C, the temperature rise of the handheld battery pack does not exceed 24°C at an ambient temperature of about 25°C.

Generally, the temperature rise characteristics of the battery pack are determined by the following factors. The first aspect is that internal resistance is one of the important factors affecting the temperature rise characteristics of the battery pack. In one embodiment, the internal resistance of the single cell in the handheld battery pack is less than or equal to 3mΩ. Optionally, the internal resistance range of the single cell in the handheld battery pack is 1.8mΩ to 3mΩ, such as 1.9mΩ, 2mΩ, 2.2mΩ, 2.6mΩ. Since the internal resistance of the single cell in the handheld battery pack is small, the temperature rise of the single cell is small, and the temperature rise of the entire handheld battery pack after packaging is also small.

The second aspect is that the specific structure of the single cell also affects the temperature rise characteristics of the battery pack. In one embodiment, the single cell in the handheld battery pack is configured as a pouch cell. The pouch design can increase the heat dissipation area of the single cell and prevent the internal temperature of the single cell from rising during charging and discharging.

The third aspect is that the thermal management device arranged inside the battery pack also has a certain impact on the temperature rise characteristics of the battery pack. The thermal management device can adjust the temperature of the battery pack, so that the battery pack can work normally even in a relatively high or low ambient temperature. For example, the thermal management device may include a heating device and/or a heat dissipation device. The heating device can heat the battery pack in a relatively low ambient temperature to prevent the battery pack from being unable to start charging and discharging due to too low temperature, so that the battery pack can start charging and discharging immediately in cold weather. The heat dissipation device can prevent the battery pack from overheating to a certain extent, so that the battery pack can start charging and discharging even in a high-temperature environment.

During the high-rate charging process, since the charging current of the handheld battery pack is relatively large, if the temperature of the handheld battery pack during the charging process is not controlled, the temperature of the handheld battery pack may be relatively high. The relatively high temperature of the handheld battery pack will cause the following problems. Firstly, during the charging process, if the temperature of the handheld battery pack exceeds a preset temperature threshold, the DC charging device may enter a charging protection state. Once entering the charging protection state, the charging process of the handheld battery pack will be forced to stop. Secondly, as mentioned earlier, if the temperature of the handheld battery pack is relatively high after the end of charging, it may be necessary to wait for the temperature of the handheld battery pack to drop before starting the discharge process of the handheld battery pack. In addition, in a working scenario with a relatively low temperature (such as outdoors in cold weather), the handheld battery pack may be too cold, resulting in that the handheld battery pack cannot start charging or discharging immediately. All the above problems may lead to the interruption of the charging of the DC charging device.

The handheld battery pack in the above embodiment can overcome the defect that the temperature rise of the battery pack is large due to high-current charging and discharging in the prior art. The temperature change range of the battery pack after high-current charging and high-current discharging is small, so the battery pack can be discharged directly after being fully charged without waiting for cooling, and can be charged directly after being discharged without waiting for cooling. Therefore, the waiting time of the power tool is short, and the work efficiency of the power tool can be further improved. In addition, since the charging time of the handheld battery pack is short, a limited number of handheld battery packs can be used for alternate charging to supply power to the power tool system, thereby reducing the use cost of the power tool system.

In order to make the entire working system light and portable, in some embodiments, the weight range of a single handheld battery pack is set to 1-3.5 Kg. Optionally, the weight of a single handheld battery pack 210 is set to 1.5-3 Kg, such as 1.5 Kg, 2 Kg, 3 Kg or others.

As mentioned earlier, the working system needs to meet the use requirement of being light and portable, and at the same time, the backpack battery pack in the working system needs to meet the characteristics of being an energy storage pack, and the handheld battery pack needs to meet the requirement of being able to be used cyclically quickly. Therefore, in some embodiments, the ratio range of the rated electric quantity to the weight of the backpack battery pack is 60-300Wh/Kg, and the maximum allowable charging rate of the handheld battery pack is not less than 7C. With this arrangement, the backpack battery pack is light in weight and sufficient in electric quantity, so that it is portable and can fully charge the handheld battery pack, and the charging rate of the handheld battery pack can support fast charging, thus meeting the requirement of fast cyclic use. Optionally, the ratio range of the rated electric quantity to the weight of a single backpack battery pack is set to 80-200Wh/Kg, such as 80Wh/Kg, 100Wh/Kg, 200Wh/Kg or others; optionally, the maximum allowable charging rate of the single cell in the handheld battery pack is set to 7-12C, such as 7C, 10C, 12C or others.

Further, in some embodiments, the discharge rate of the backpack battery pack is greater than or equal to 2C, and optionally, the discharge rate of the backpack battery pack is set to 4-10C, such as 4C, 5C, 10C or others. This enables the backpack battery pack to support high-current discharge, meeting the requirement of charging the handheld battery pack as an energy storage pack. In some embodiments, the maximum allowable discharge power of the backpack battery pack is not less than the maximum allowable charging power of the handheld battery pack, so that the handheld battery pack can be charged quickly, thereby meeting the requirement of cyclic use. It should be noted that in some embodiments, in order to minimize the charging waiting time t3 as much as possible, when the handheld battery pack is charged at a rate of 3C, the temperature rise of the handheld battery pack does not exceed 14°C at an ambient temperature of about 20°C; and/or when the handheld battery pack is charged at a rate of 5C, the temperature rise of the handheld battery pack does not exceed 19°C at an ambient temperature of about 20°C; and when the handheld battery pack is charged at a rate of 10C, the temperature rise of the handheld battery pack does not exceed 24°C at an ambient temperature of about 25°C. In some embodiments, the internal resistance of the single cell in the handheld battery pack is less than or equal to 3mΩ. Optionally, the internal resistance range of the single cell in the handheld battery pack is 1.8mΩ to 3mΩ, such as 1.9mΩ, 2mΩ, 2.2mΩ, 2.6mΩ.

In order to better meet the requirement that the backpack battery pack fully charges the handheld battery pack, the rated electric quantity of the backpack battery pack needs to be greater than the rated electric quantity of the handheld battery pack. The rated electric quantity of the backpack battery pack is defined as the first electric quantity, and the rated electric quantity of the handheld battery pack is defined as the second electric quantity. Optionally, the ratio range of the first electric quantity to the second electric quantity is greater than or equal to 2. In this way, one backpack battery pack can also fully charge at least 2 handheld battery packs, which can effectively alleviate the user's anxiety about power consumption. Further, the ratio range of the first electric quantity to the second electric quantity is 3-15. Since the electric quantity stored in the backpack battery pack is much larger than that stored in the handheld battery pack, a plurality of handheld battery packs can be supplemented with electric energy by carrying the backpack battery pack. Optionally, the ratio of the first electric quantity to the second electric quantity is 3, 4, 5, 7, 10, 12 or others.

It should be noted that "the ratio of the first electric quantity to the second electric quantity" also refers to the ratio of the electric quantity of a single backpack battery pack to the electric quantity of a single handheld battery pack.

In order to better meet the requirement that the backpack battery pack fully charges the handheld battery pack, the rated capacity of the backpack battery pack also needs to be greater than the rated capacity of the handheld battery pack. The rated capacity of the backpack battery pack is defined as the first capacity; the rated capacity of the handheld battery pack is defined as the second capacity, and the first capacity is greater than the second capacity.

Further, the ratio range of the first capacity to the second capacity is 3-15. Optionally, the ratio of the first capacity to the second capacity is 3, 4, 5, 7, 10, 12, etc. With this arrangement, one backpack battery pack can fully charge a plurality of handheld battery packs, which can effectively alleviate the user's anxiety about power consumption.

It should be noted that "the ratio of the first capacity to the second capacity" refers to the ratio of the rated capacity of a single backpack battery pack to the rated capacity of a single handheld battery pack.

When the first capacity and the second capacity are too large, the volume and weight of the backpack battery pack and the handheld battery pack will increase accordingly, which is inconvenient for carrying and use. When the first capacity and the second capacity are too small, they cannot meet the electric quantity requirement of the garden team for a day's outdoor work. Optionally, the range of the first capacity is 11-30 AH, and/or the range of the second capacity is 2-8 AH.

In some embodiments, the weight of the backpack battery pack is also greater than the weight of the handheld battery pack. Therefore, as shown in Figure 4, the backpack battery pack can be mounted on the second type of power tool to supply power thereto, and the user does not need to directly bear the weight of the backpack battery pack 200. As shown in Figure 12, the handheld battery pack can be mounted on the first type of power tool to supply power thereto. Of course, as mentioned earlier, the backpack battery pack can also supply power to the power tool by connecting to the carrying device. In this way, the user can carry the backpack battery pack on the back, thereby facilitating use. In order to facilitate the working team to carry, transport and use the backpack battery pack and the handheld battery pack, in one embodiment, the weight range of a single backpack battery pack is 4-12 KG, and/or the weight range of a single handheld battery pack is 1-3.5 KG.

In some embodiments, the weight ratio of a single backpack battery pack to a single handheld battery pack is greater than 1. Further, in order to prevent the DC charging device from tipping over when the backpack battery pack and the handheld battery pack are mounted on the DC charging device, the weight ratio of a single backpack battery pack to a single handheld battery pack is greater than or equal to 2 and less than or equal to 8.

Similarly, since the first capacity is greater than the second capacity, the volume of the backpack battery pack is also greater than the volume of the handheld battery pack. In order to avoid that the volume is too large to affect the floor area, in some embodiments, the volume range of a single backpack battery pack is 3-20 L, and/or the volume range of the handheld battery pack 210 is 0.5-3 L. Optionally, the volume ratio of the backpack battery pack to the handheld battery pack is greater than 1. Further, the volume ratio of the backpack battery pack to the handheld battery pack is greater than or equal to 2 and less than or equal to 10.

As mentioned earlier, the user needs to select a backpack battery pack with large capacity and light weight to meet the work requirement of being an energy storage pack, which puts high requirements on the energy density of the backpack battery pack, while the handheld battery pack has relatively low requirements on energy density. The energy density of the battery pack refers to the electric quantity stored in the battery pack per unit mass/volume. In the present application, the electric quantity stored in the battery pack per unit mass is defined as the ratio of the rated electric quantity to the weight, and the electric quantity stored in the battery pack per unit volume is defined as the ratio of the rated electric quantity to the volume. In some embodiments, the ratio of the rated electric quantity to the weight of the backpack battery pack is greater than the ratio of the rated electric quantity to the weight of the handheld battery pack. Optionally, the ratio range of the rated electric quantity to the weight of the backpack battery pack is 60-300Wh/Kg, and/or the ratio range of the rated electric quantity to the weight of the handheld battery pack is 60-300Wh/Kg. The ratio range of the rated electric quantity to the volume of the backpack battery pack is 40-220Wh/L, and/or the ratio range of the rated electric quantity to the volume of the handheld battery pack is 60-220Wh/L.

Since the handheld battery pack needs to meet the work requirement of cyclic use, in some embodiments, the maximum allowable charging rate of the handheld battery pack is greater than the maximum allowable charging rate of the backpack battery pack.

Similarly, in order to meet the work requirement of cyclic use, the charging waiting time of the handheld battery pack also needs to be less than the charging waiting time of the backpack battery pack. Therefore, in some embodiments, under the condition of charging at the same rate, the temperature rise of the handheld battery pack is less than the temperature rise of the backpack battery pack.

Moreover, since internal resistance is one of the important factors affecting the temperature rise characteristics of the battery pack, in some embodiments, the internal resistance of the single cell in the handheld battery pack is less than the internal resistance of the single cell in the backpack battery pack.

In some embodiments, the single cell in the backpack battery pack is different from the single cell in the handheld battery pack. Those skilled in the art can select the single cell in the backpack battery pack and the single cell in the handheld battery pack according to needs. For example, both the single cell in the backpack battery pack and the single cell in the handheld battery pack are pouch cells; or the single cell in the backpack battery pack is a pouch cell, and the single cell in the handheld battery pack is a cylindrical cell; or both the single cell in the backpack battery pack and the single cell in the handheld battery pack are cylindrical cells, which is not limited by the present application.

In an actual work scenario, the backpack battery pack is more used as an energy storage pack for supplying power to the handheld battery pack, and the user rarely needs to directly bear the weight of the backpack battery pack. Therefore, compared with the handheld battery pack, the requirement for the weight of the backpack battery pack is relatively low. Therefore, taking the backpack battery pack 200' recharging the handheld battery pack 210 as an example, the single cell in the backpack battery pack 200' is a relatively heavy 21700 cylindrical cell, and the single cell in the handheld battery pack 210 is a relatively light pouch cell, thereby reducing the cost of the single cell.

As mentioned earlier, compared with the backpack battery pack, since the handheld battery pack is lighter and cheaper, the working team of the garden work is more willing to use the handheld battery pack as the energy source of the power tool. In order to keep the handheld battery pack continuously powered and meet the work requirement for a long time, the working system 1 further provides an energy supply system. The energy supply system includes a DC charging device, which is used to convert the power of the backpack battery pack and supply it to the handheld battery pack, so as to continuously meet the power requirement of the handheld battery pack.

The DC charging device includes at least one input interface and at least one output interface, the input interface is configured to detachably mount the backpack battery pack, and the output interface is used for detachably connecting with the handheld battery pack. The DC charging device further includes at least one DC charging module, and the DC charging module is configured to convert the electric energy of the backpack battery pack and transmit it to the handheld battery pack, so that the backpack battery pack charges the handheld battery pack.

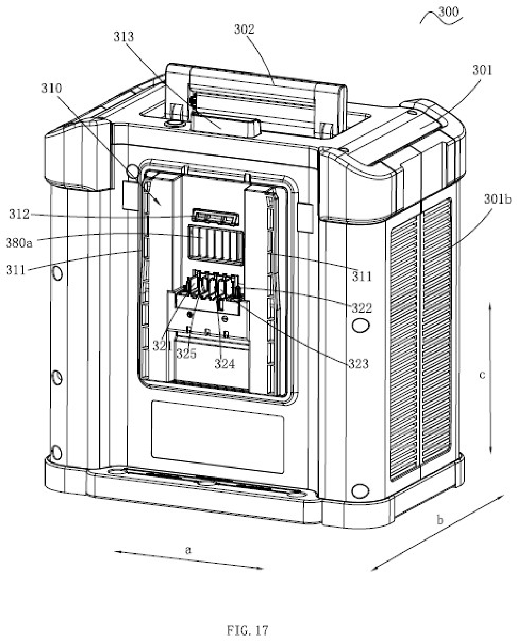

In some embodiments, referring to Figures 17 to 18, the DC charging device 300 includes a housing 301, and the DC charging device 300 has a length direction a, a width direction b and a height direction c. Specifically, the housing 301 extends longitudinally along the height direction c.

For the convenience of the user to carry, the housing 301 is provided with a holding portion 302. Optionally, the holding portion 302 is configured as a handle. Further, the holding portion 302 is pivotally connected with the housing 301, and the holding portion 302 can be turned upward to be held upright by the user, or turned downward to be stored on the housing 301.

The DC charging device 300 includes one input interface 310 and one output interface 320, and the input interface 310 and the output interface 320 are oppositely arranged along the width direction perpendicular to the height direction c. The input interface 310 and the output interface 320 are oppositely arranged, which can reasonably use the space of the DC charging device 300, and also help the DC charging device 300 keep balanced and not easy to tip over.

In this embodiment, the number of input interfaces and output interfaces is 1 each. In other embodiments, the number of input interfaces and output interfaces may be other numbers, such as 2, 3, 4, 6, etc., which is not specifically limited here and depends on the actual situation.

The number of input interfaces and output interfaces may be the same or different. Taking the number of input interfaces being 1 and the number of output interfaces being 2 as an example, the input interface is arranged on one side of the DC charging device, and the 2 output interfaces are arranged on the other side of the DC charging device. In this way, the backpack battery pack can charge 2 handheld battery packs, and the charging mode can be simultaneous charging or sequential charging.

Taking the backpack battery pack 200 and the handheld battery pack 210 mounted to the DC charging device 300 as an example, the input interface 310 includes a pair of first connecting portions 311 extending along a first sliding direction, which are used to connect with the pair of first matching portions 201a, 201b and guide the backpack battery pack 200 to be slidably mounted to or detached from the DC charging device 300 along the first sliding direction. The output interface 320 includes a pair of second connecting portions 321 extending along a second sliding direction, which are used to connect with the pair of second matching portions 211a, 211b and guide the handheld battery pack 210 to be slidably mounted to or detached from the DC charging device 300 along the second sliding direction. The structures of the input interface and the output interface may be the same or different. In this embodiment, the first sliding direction and the second sliding direction are parallel to each other and both parallel to the height direction c, and the size of the first connecting portions 311 along the height direction c is larger than the size of the second connecting portions 321 along the height direction c.

In this embodiment, the structure of the input interface 310 is basically the same as the structure of the aforementioned first tool interface 111, and the structure of the output interface 320 is basically the same as the structure of the aforementioned second tool interface 141. That is, the pair of first connecting portions 311 are configured as a pair of outer guide rails, and the pair of second connecting portions 321 are configured as a pair of inner guide rails.

Of course, it is easy for those skilled in the art to think that the first connecting portions and the second connecting portions can also be set in other forms, which is not limited by the present application, as long as the input interface and the backpack battery pack interface, and the output interface and the handheld battery pack interface can be matched and connected with each other.

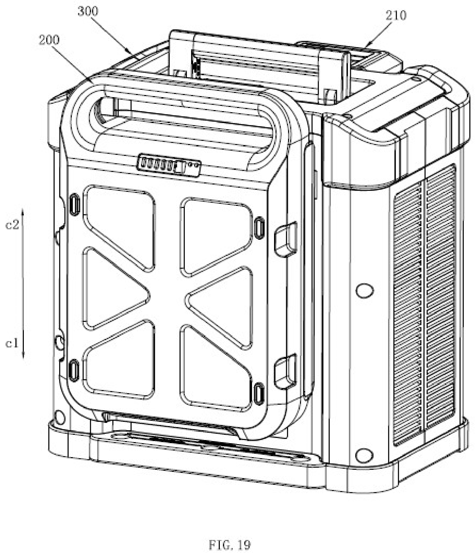

In this embodiment, the plugging direction of the backpack battery pack 200 with the DC charging device 300 is parallel to the plugging direction of the handheld battery pack 210 with the DC charging device 300. The plugging direction refers to the installation direction of the battery pack to the DC charging device and the direction in which the battery pack is detached from the DC charging device. Specifically, the plugging direction is parallel to the height direction c. The backpack battery pack 200 slides along the pair of first connecting portions 311 in the height direction from top to bottom (direction c1 as shown in Figure 19), so that the backpack battery pack 200 can be mounted to the DC charging device 300; the handheld battery pack 210 slides along the pair of second connecting portions 321 in the height direction from top to bottom, so that the handheld battery pack 210 can be mounted to the DC charging device 300. The backpack battery pack 200 slides along the pair of first connecting portions 311 in the height direction from bottom to top (direction c2 as shown in Figure 19), so that the backpack battery pack 200 can be detached from the DC charging device 300; the handheld battery pack 210 slides along the pair of second connecting portions 321 in the height direction from bottom to top, so that the handheld battery pack 210 can be detached from the DC charging device 300.

Further, referring to Figure 17, the input interface 310 further includes a plurality of first charging terminals, which are located between the pair of first connecting portions 311, including a first positive terminal 321, a first negative terminal 322, a first analog signal communication terminal 323, a first digital signal communication terminal 324 and a second digital signal communication terminal 325. The input interface 310 has two digital communication modes and can communicate with two different types of battery packs. In this embodiment, the communication type of the first digital signal communication terminal 324 is serial communication, and the communication type of the second digital signal communication terminal 325 is differential communication. Specifically, the differential communication may be CAN (Controller Area Network) communication.

Correspondingly, the backpack battery pack terminals (not shown) include a first positive contact, a first negative contact, a first digital signal communication contact and a second digital signal communication contact. In this embodiment, the communication type of the first digital signal communication contact is serial communication, and the communication type of the second digital signal communication contact is differential communication. Specifically, the differential communication may be CAN communication.

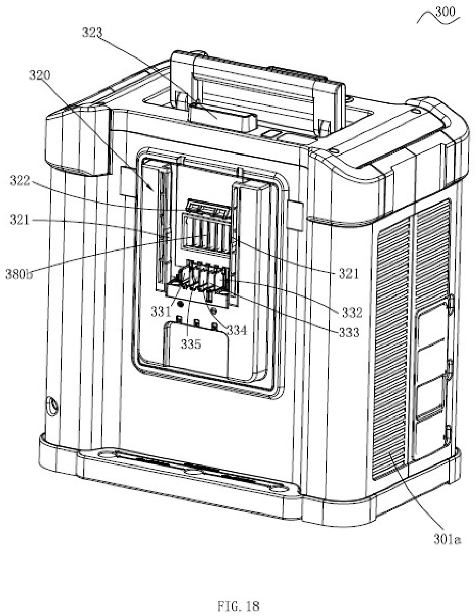

Referring to Figure 18, the output interface 320 further includes a plurality of second charging terminals, which are located between the pair of second connecting portions 321, including a second positive terminal 331, a second negative terminal 332, a second analog signal communication terminal 333, a third digital signal communication terminal 334 and a fourth digital signal communication terminal 335. The output interface 320 has two digital communication modes and can communicate with two different types of battery packs. In this embodiment, the communication type of the third digital signal communication terminal 334 is serial communication, and the communication type of the fourth digital signal communication terminal 335 is differential communication. Specifically, the differential communication may be CAN (Controller Area Network) communication.

Correspondingly, the handheld battery pack terminals (not shown) include a second positive contact, a second negative contact, a third digital signal communication contact and a fourth digital signal communication contact. In this embodiment, the communication type of the third digital signal communication contact is serial communication, and the communication type of the fourth digital signal communication contact is differential communication. Specifically, the differential communication may be CAN communication.

Specifically, when the backpack battery pack 200 is mounted to the DC charging device 300, the first positive terminal 321, the first negative terminal 322, the first analog signal communication terminal 323, the first digital signal communication terminal 324 and the second digital signal communication terminal 325 are respectively plugged with the first positive contact, the first negative contact, the first digital signal communication contact and the second digital signal communication contact. The DC charging device 300 first activates the backpack battery pack 200 through the first analog signal communication terminal 323, and then performs digital signal communication with the backpack battery pack 200 through the second digital signal communication terminal 325. When the communication is successful, the DC charging device 300 recognizes that the backpack battery pack 200 is in a direct plug-in connection.

Similarly, when the handheld battery pack 210 is mounted to the DC charging device 300, the second positive terminal 331, the second negative terminal 332, the second analog signal communication terminal 333, the third digital signal communication terminal 334 and the fourth digital signal communication terminal 335 are respectively plugged with the second positive contact, the second negative contact, the third digital signal communication contact and the fourth digital signal communication contact. The DC charging device 300 first activates the handheld battery pack 210 through the second analog signal communication terminal 333, and then performs digital signal communication with the handheld battery pack 210 through the fourth digital signal communication terminal 335. When the communication is successful, the DC charging device 300 recognizes that the handheld battery pack 210 is in a direct plug-in connection.

Referring to Figures 7 and 17, the input interface 310 further includes a first locking element 312 located between the pair of first connecting portions 311. When the backpack battery pack 200 is mounted to the DC charging device 300, the first locking element 312 is used to cooperate with the first locking portion 250 of the backpack battery pack, so as to realize the connection and locking between the backpack battery pack 200 and the DC charging device 300. Referring to Figures 10 and 18, the output interface 320 further includes a second locking element 322 located between the second connecting portions 321. When the handheld battery pack 210 is mounted to the DC charging device 300, the second locking element 322 is used to cooperate with the second locking portion 260 of the handheld battery pack, so as to realize the connection and locking between the handheld battery pack 200 and the DC charging device 300. In this embodiment, the first locking element 312 and the second locking element 322 are configured as latches, and the first locking portion 250 and the second locking portion 260 are configured as slots that can cooperate with the latches.

Further, the DC charging device 300 further includes a first trigger element 313, and the first trigger element 313 can drive the first locking element 312 to move from a locking position to an unlocking position. When the first locking element 312 is in the locked position, the first locking element 312 cooperates with the first locking portion 250 to lock the DC charging device 300 and the backpack battery pack 200; when the first locking element 312 is in the unlocked position, the first locking element 312 is disengaged from the first locking portion 250, and the DC charging device 300 is unlocked from the backpack battery pack 200. The DC charging device 300 further includes a second trigger element 323, and the second trigger element 323 can drive the second locking element 322 to move from the locked position to the unlocked position. When the second locking element 322 is in the locked position, the second locking element 322 cooperates with the second locking portion 260 to lock the DC charging device 300 and the handheld battery pack 210; when the second locking element 322 is in the unlocked position, the second locking element 322 is disengaged from the second locking portion 260, and the DC charging device 300 is unlocked from the handheld battery pack 210. Optionally, the first trigger element 313 and the second trigger element 323 are configured as buttons and are movably connected to the housing 301.

It should be noted that the first locking element 312, the second locking element 322, the first locking portion 250 and the second locking portion 260 can also be set in other forms, such as the first locking element 312 and the second locking element 322 are set as slots, and the first locking portion 250 and the second locking portion 260 are set as latches matched with the slots, which is not limited by the present application.

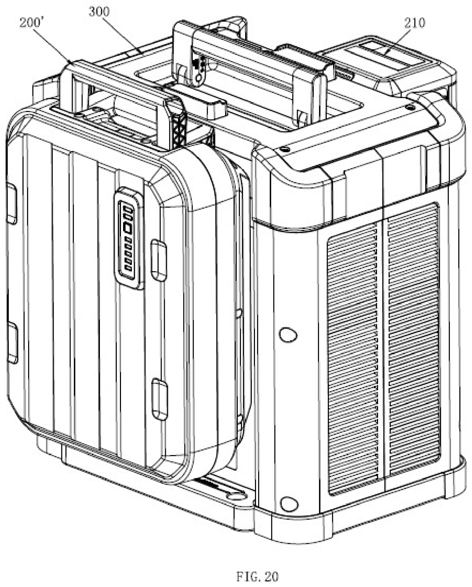

In other embodiments, since all backpack battery packs in the battery pack system 20 have interfaces of the same structure, and all handheld battery packs also have interfaces of the same structure, the backpack battery packs and the handheld battery packs can also be other types of battery packs. As shown in Figure 20, the input interface can be mounted with a backpack battery pack 200', and the output interface can be mounted with a handheld battery pack 210. By using the DC charging device 300, the backpack battery pack 200' can also realize recharging the handheld battery pack 210.

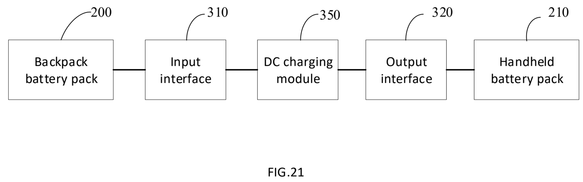

The DC charging module 350 is configured to receive electric energy from the input interface 310, convert the electric energy and transmit the converted electric energy to the output interface 320, so that the backpack battery pack charges the handheld battery pack. Optionally, the DC charging module 350 is arranged in the housing 301. Referring to Figure 21, the DC charging module 350 is electrically connected to the input interface 310 and the output interface 320. Specifically, the charging module 350 is electrically connected to the first charging terminals and the second charging terminals. It can be understood that the DC charging module 350 is a DCDC (Direct Current-Direct Current) module. When the backpack battery pack 200 is mounted to the input interface 310 and the handheld battery pack 210 is mounted to the output interface 320, the DC charging module 350 is used to convert the DC electric energy stored in the backpack battery pack 200 into DC electric energy for charging the handheld battery pack 210. Generally, the DC charging module 350 is used for voltage conversion to convert the received voltage of the backpack battery pack 200 into an output voltage adapted to the handheld battery pack 210.

When the garden team goes out to work during the day and AC power is not available, the existing backpack battery packs in the battery pack system can be directly used. By carrying the large-capacity backpack battery packs, the DC charging device is used to charge the handheld battery packs, which solves the problem of power consumption anxiety when the garden team works outdoors.

In order to carry lighter equipment on the basis of meeting the power demand, as an implementation mode, taking a two-person garden team composed of worker A and worker B as an example, the garden team carries one backpack battery pack, two handheld battery packs and one DC charging device, all of which are fully charged by AC power the previous night. After arriving at the work site, worker A and worker B respectively use one handheld battery pack to mount the corresponding power tools (such as handheld blowers, grass trimmers or pruning machines) to work. When the electric quantity of any handheld battery pack is insufficient, it can be mounted to the DC charging device to be recharged by the backpack battery pack, and continue to be used after being fully charged, so as to meet the use demand of continuous work. In this way, even in the scenario where there is no commercial power socket at the work site, the problem of power supply for the power tool system can still be effectively solved.

It should be noted that in order to meet richer work scenarios and longer working hours, the garden team can also carry a plurality of backpack battery packs. Since the backpack battery pack can supply power both to the power tool and to the handheld battery pack, the garden team can use some of the backpack battery packs as energy storage packs for supplying power to the handheld battery packs, and use other backpack battery packs as tool packs for supplying power to the power tools, so as to meet the work demands in different use scenarios.

As a reference implementation mode, still taking a two-person garden team composed of worker A and worker B as an example, the garden team carries two backpack battery packs, three handheld battery packs and one DC charging device, all of which are fully charged by AC power the previous night. After arriving at the work site, worker A first mounts a backpack battery pack to an automatic lawn mower to let it mow automatically, then uses one handheld battery pack to mount to a grass trimmer to trim grass. Worker B uses one handheld battery pack to mount to a pruning machine to prune branches. When the electric quantity of the two handheld battery packs is insufficient, one of the handheld battery packs can be mounted to the DC charging device to be recharged by a spare backpack battery pack, and continue to be used after being fully charged. The other spare handheld battery pack is used to replace the battery pack with insufficient electric quantity for work, so as to meet the use demand of continuous work.

As mentioned earlier, the garden team usually goes to many work sites during one day's work, so the weight of the entire working system should not be too large, otherwise it is not conducive to the frequent handling and carrying of the garden team during the operation.

In some embodiments, the battery pack system includes one backpack battery pack and two handheld battery packs, the energy supply system includes one DC charging device, and the weight range of the power supply system is 16-31 Kg. In some embodiments, the battery pack system includes two backpack battery packs and two handheld battery packs, the energy supply system includes one DC charging device, and the weight range of the power supply system is 20-43 Kg. In some embodiments, the battery pack system includes one backpack battery pack and one handheld battery pack, the energy supply system includes one DC charging device, and the weight range of the power supply system is 15-27.5 Kg. As an example, the battery pack system includes one backpack battery pack and two handheld battery packs, the energy supply system includes one DC charging device, and the weight of the power supply system is 24 Kg. Among them, the weight of the backpack battery pack is 8 Kg, the weight of the handheld battery pack is 2 Kg, and the weight of the DC charging device 300 is 12 Kg.

On the one hand, since the work site of the garden team is usually outdoors, it is difficult to find AC power for use; on the other hand, if AC power is to be used to supply power to the backpack battery packs and/or the handheld battery packs, a power conversion module for converting AC power to DC power (Alternating Current-Direct Current) must be arranged in the DC charging device, which will inevitably increase the weight and volume of the DC charging device, and the working system cannot be compact and portable, thus being unfavorable for the work of the garden team. In one embodiment, the DC charging device is only provided with the input interface for receiving power input, in other words, the DC charging device is not provided with an AC input interface and/or other DC input interfaces.

Since the rated electric quantity of the handheld battery pack is smaller than that of the backpack battery pack, in actual work, there is usually no demand for the handheld battery pack to recharge the backpack battery pack. Therefore, in order to save costs and simplify the charging logic, in one embodiment, the input interface is configured to only receive power input from the backpack battery pack and not output power to the outside; the output interface is configured to only output power to the handheld battery pack and not receive power input from the outside.

In order to enable the garden team to work continuously, the backpack battery pack needs to fully charge the handheld battery pack from an empty state to a full state in a short time.

However, the charging speed of traditional battery packs is generally slow. The reason why the charging speed of the battery pack is slow is that, on the one hand, it is limited by the poor performance (such as charging rate) of the single cell itself, and on the other hand, it is limited by the low charging power that the charger for charging the battery pack can provide. Currently, chargers on the market generally need to take power from commercial power sockets. However, considering safety reasons, the power available from commercial power sockets is usually limited. For example, the power available from commercial power sockets in North America is generally limited to less than 1.8 KW, and the power available from commercial power sockets in Europe is generally limited to less than 3.6 KW. Due to the limited power of commercial power sockets, chargers on the market cannot charge the battery packs with high power. Once the electric quantity of the large-capacity battery pack is exhausted, it usually takes a long time (much longer than the endurance time that the battery pack can provide) to charge the battery pack.

Therefore, it is necessary to improve the charging speed of the battery pack from two aspects: improving the charging rate of the battery pack and improving the charging power of the charging equipment.

In some embodiments, the first charging rate when the backpack battery pack charges the handheld battery pack is greater than or equal to the second charging rate when the commercial power charges the handheld battery pack, and the ratio of the first charging rate to the second charging rate is greater than or equal to 1 and less than or equal to 3.

The first charging rate of the backpack battery pack for the handheld battery pack is the ratio of the maximum output power of the backpack battery pack to the handheld battery pack to the rated electric quantity of the handheld battery pack, and the second charging rate of the commercial power for the handheld battery pack is the ratio of the maximum output power of the commercial power to the rated electric quantity of the handheld battery pack. When a traditional charger charges the handheld battery pack, the input power is usually commercial power. Due to the limitation of commercial power, the charging speed of the handheld battery pack is slow. The backpack battery pack provided in this embodiment uses the DC energy storage module to charge the handheld battery pack, which can increase the charging power for the handheld battery pack, thus increasing the charging speed.

Specifically, the charging power provided by the backpack battery pack can make the first charging rate greater than or equal to 2C, and optionally, the first charging rate is 3C, 4C, 5C, 7C, 10C or 12C. However, the charging power provided by the commercial power can only support the second charging rate of the handheld battery pack 210 to be between 1C and 2C. Therefore, the speed of charging the handheld battery pack by using the backpack battery pack is much higher than the speed of charging the handheld battery pack by using the commercial power.

When the first charging rate is set to 3C, the handheld battery pack can be charged from an empty state to a full state in about 20 minutes. When the first charging rate is set to 5C, the handheld battery pack can be charged from an empty state to a full state in about 12 minutes.

Correspondingly, for the same battery pack, the first charging time required for the backpack battery pack to charge the handheld battery pack from an empty state to a full state is less than the second charging time required for the AC power to charge the handheld battery pack from an empty state to a full state.

In some embodiments, the maximum output power of the backpack battery pack is greater than or equal to the maximum output power of the commercial power. The ratio of the maximum output power of the backpack battery pack to the maximum output power of the AC power is greater than 1 and less than or equal to 3. Optionally, the ratio of the maximum output power of the backpack battery pack 200 to the maximum output power of the AC power can be 2 or 3. The maximum output power of the backpack battery pack 200 is greater than or equal to 1.8 Kw; optionally, the maximum output power of the backpack battery pack is greater than or equal to 3 Kw. For example, the maximum output power of the backpack battery pack is 3.6 Kw, 4 Kw, 5 Kw, 6 Kw, 7 Kw, 10 Kw, 12 Kw or others. The output power of the commercial power is less than 1.8 KW.

By using the backpack battery pack to charge the handheld battery pack, the problems of limited charging power and slow charging speed of the traditional charger due to taking commercial power from the socket can be solved. The output power of the backpack battery pack is greater than that of the commercial power, so the charging speed when using the backpack battery pack to charge the handheld battery pack is also greater than the charging speed when using the commercial power to charge the handheld battery pack.

In some embodiments, the DC charging device further includes a heating device (not shown) and/or a heat dissipation device, which are used to control the temperature of the backpack battery pack and the handheld battery pack during the charging and discharging process, so that the backpack battery pack can discharge continuously and the handheld battery pack can charge continuously, and also ensure that the handheld battery pack can start discharging to the power tool immediately after the charging is completed.

Referring to Figures 17 and 18, the heat dissipation device of the DC charging device 300 includes an air inlet and an air outlet. Specifically, there are 2 air inlets, including a first air inlet 380a and a second air inlet 380b. Both the first air inlet 380a and the second air inlet 380b are arranged on the housing 301. In the length direction a, the first air inlet 380a is located between the pair of first connecting portions 311, and the second air inlet 380b is located between the pair of second connecting portions 321.

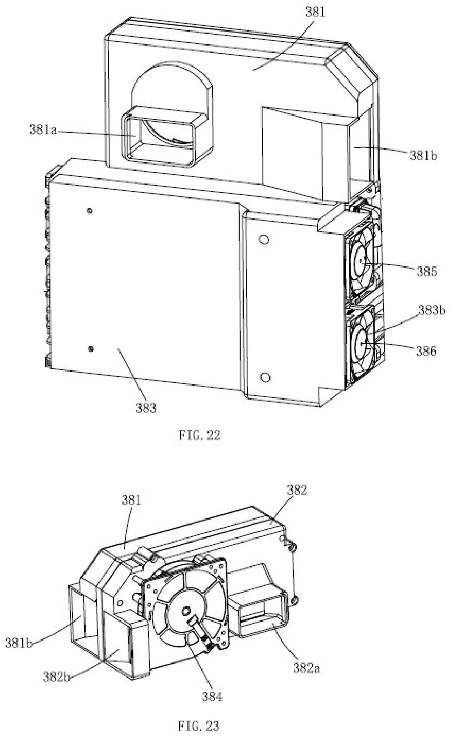

Referring to Figures 22 and 23, Figure 22 is an internal structural diagram of the DC charging device 300 with the housing 301 removed. A first air passage 381 corresponding to the input interface 310 is arranged in the upper space of the DC charging device 300 far from the lower part. A second air passage 382 corresponding to the output interface 320 is also arranged in the upper space of the DC charging device 300 far from the lower part. The first air passage 381 and the second air passage 382b are arranged opposite to each other. The air inlet 381a of the first air passage 381 is butted and communicated with the first air inlet 380a, the air inlet 382a of the second air passage 382 is butted and communicated with the second air inlet 380b, and the air outlet 381b of the first air passage 381 and the air outlet 382b of the second air passage 382 are both located on one side of the housing 301 in the length direction a, and are both butted and communicated with the air outlet 301a arranged on one side of the housing 301 in the length direction a.

A first fan (not shown in the figure) is arranged in the first air passage 381, and the first fan is located inside the housing of the first air passage 381 and corresponds to the position of the air inlet 381a of the first air passage 381. The second air passage 382 is provided with a second fan 384, and the second fan 384 is arranged outside the housing of the second air passage 382 and between the air inlet 382a and the air outlet 382b of the second air passage 382.

Taking the backpack battery pack 200 charging the handheld battery pack 210 through the DC charging device 300 as an example, when both the backpack battery pack 200 and the handheld battery pack 210 are mounted to the DC charging device 300, as shown in Figures 7 and 10, the backpack battery pack 200 is provided with an air inlet (not shown) and an air outlet 270, and the handheld battery pack 210 is provided with an air inlet (not shown) and an air outlet 280. The first air inlet 380a is butted and communicated with the air outlet 270, and the second air outlet 380b is butted and communicated with the air outlet 280. When the backpack battery pack 200 needs to be cooled, the first fan is started, and the air flow flows into the backpack battery pack 200 from the air inlet arranged on the backpack battery pack 200. After cooling the cells accommodated in the backpack battery pack 200, the air flow flows out from the air outlet 270 arranged on the backpack battery pack 200, then flows into the air inlet 381a through the first air inlet 380 communicated with the air outlet 270, passes through the housing of the first air passage 381, flows out of the first air passage 381 from the air outlet 381b, and flows out of the housing 301 from the air outlet 301a communicated with the air outlet 381b. When the handheld battery pack 210 needs to be cooled, the second fan 382 is started, and the air flow flows into the handheld battery pack 210 from the air inlet (not shown) arranged on the handheld battery pack 200. After cooling the cells accommodated in the handheld battery pack 210, the air flow flows out from the air outlet 280 arranged on the handheld battery pack 210, then flows into the air inlet 382a through the second air inlet 380b communicated with the air outlet 280, passes through the housing of the second air passage 382, flows out of the second air passage 382 from the air outlet 382b, and flows out of the housing 301 from the air outlet 301a communicated with the air outlet 382b.

The first air passage and the second air passage are arranged in the DC charging device, so that the air flows for cooling the backpack battery pack and the handheld battery pack will not be mixed, thus the cold and hot air flows will not meet, and the cooling effect is better.

When the DC charging device 300 works, the electronic components accommodated inside the housing 301 generate a large amount of heat and also need to be cooled. The DC charging device 300 further includes a third air passage 383. The housing of the third air passage 383 accommodates electronic components (not shown). The third air passage 383 is arranged below the first air passage 381 and the second air passage 382. The air inlet (not shown) of the third air passage 383 is butted and communicated with the air inlet 301a arranged on one side of the housing 301 in the length direction a, and the air outlet 383b of the third air passage 383 is butted and communicated with the air outlet 301b arranged on the other side of the housing 301 in the length direction a. It can be seen from Figures 21 and 22 that the first air passage 381, the second air passage 382 and the third air passage 383 all discharge air from the same side.

The third air passage 383 can be provided with a plurality of fans. In this example, the third air passage 383 is provided with three fans, which are a third fan 385, a fourth fan 386 and a fifth fan (not shown in the figure). The third fan 385 and the fourth fan 386 are arranged on the same side and are both located at the air outlet 383b of the third air passage 383. The fifth fan is arranged inside the third air passage 383. The outer contours of the third fan 385, the fourth fan 386 and the fifth fan are all circular, and the central axes of the fans all pass through the centers of the fans, wherein the central axis of the fifth fan is perpendicular to the central axes of the third fan 385 and the fourth fan 386. Although the third air passage is provided with a plurality of fans, the plurality of fans do not have to work at the same time when the DC charging device is powered on. Only one or two fans can be turned on, or all three fans can be turned on at the same time.

The above DC charging device is provided with a plurality of independent air passages and fans, which can dissipate heat for different battery packs and electronic components respectively during charging, so that cold and hot air flows will not meet, and the heat dissipation efficiency is improved.

When the garden team does not work at night, it is necessary to use AC power to charge the backpack battery packs and the handheld battery packs, so that the garden team can carry the fully charged backpack battery packs and handheld battery packs when going out to work. Therefore, the energy supply system further includes at least one AC charging device. The AC charging device includes at least one charging interface and at least one AC charging module. The charging interface is configured to detachably mount the backpack battery pack and/or the handheld battery pack. The AC charging module is configured to receive AC electric energy from the input power interface, convert the AC electric energy into DC electric energy and output the DC electric energy to the charging interface, so as to charge the backpack battery pack and/or the handheld battery pack.

The energy supply system includes not only the DC charging device but also the AC charging device, so that the working team can only carry the DC charging device when working during the day, and use the backpack battery pack as an energy storage pack to supply power to the handheld battery pack, so as to realize long-time work. After returning home at night, the AC charging device is used to charge the backpack battery packs and/or the handheld battery packs to meet the power demand for work the next day. This arrangement enables the working team to carry no more devices when working during the day, and easily realize carrying and handling.

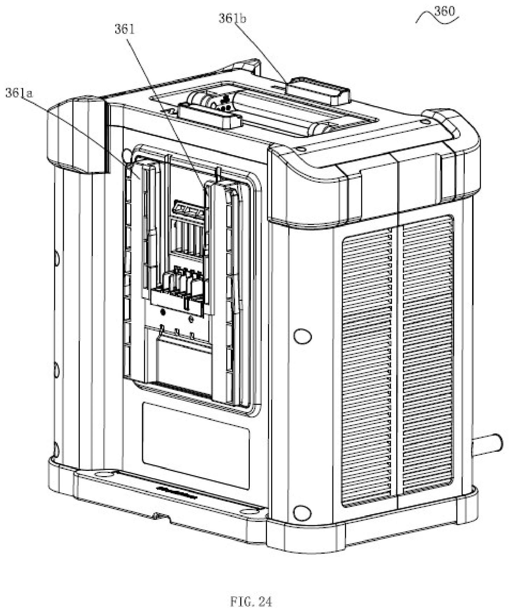

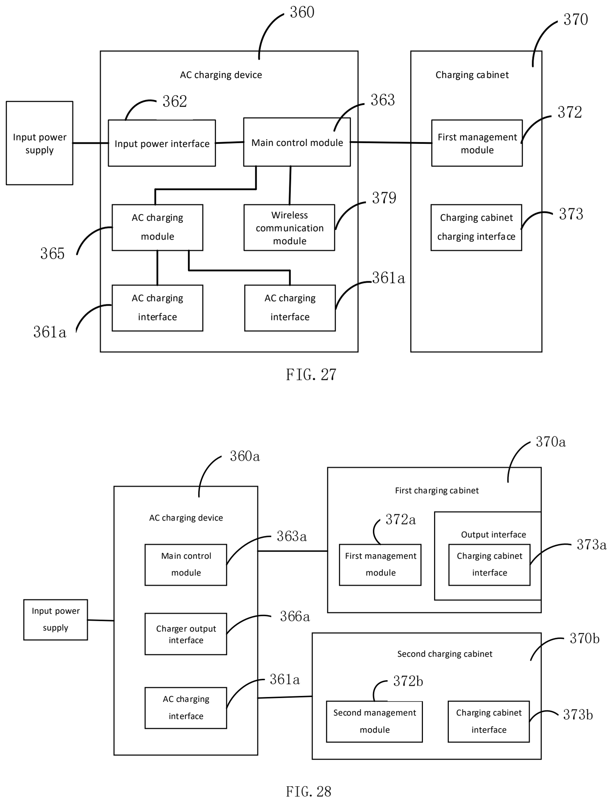

In some embodiments, as shown in Figure 24, the energy supply system 30 includes an AC charging device 360, and the AC charging device 360 includes an AC charging module 365 (refer to Figure 27) and a charging interface 361. In this embodiment, the charging interface 361 includes two charging interfaces 361a and 361b, and the two charging interfaces 361a and 361b are arranged opposite to each other.

In order to make the AC charging device more universal, the charging interfaces can be used to mount both the backpack battery packs and the handheld battery packs. In this embodiment, the structures of the charging interfaces 361a and 361b are the same, that is, the charging interfaces 361a and 361b both include the structures of the aforementioned first tool interface 111 and third tool interface 113. In other words, the charging interfaces 361a and 361b both include the structures of the aforementioned input interface 310 and output interface 320. In other embodiments, the structure of the charging interface is the same as that of the input interface 310; and/or the structure of the charging interface is the same as that of the output interface 320, which is not limited by the present application.

When both charging interfaces 361a and 361b of the AC charging device 360 are mounted with battery packs (the battery packs can be two backpack battery packs, two handheld battery packs, or one backpack battery pack and one handheld battery pack), the AC charging device 360 obtains the access order and remaining electric quantity of the two battery packs, and charges the battery packs according to the plug-in order and remaining electric quantity. The charging priority of the AC charging device 360 for the battery packs is: the priority of the plug-in order is higher than the priority of the remaining electric quantity. That is, the AC charging device 360 first determines the charging order of the battery packs according to the plug-in order, and when the plug-in orders are the same, determines the charging priority order of the battery packs according to the remaining electric quantity. Specifically, when the AC charging device 360 charges the battery packs, it first charges the battery pack that is connected first, and then charges the battery pack that is connected later. When two battery packs are plugged into the AC charging device 360 at the same time, that is, the AC charging device 360 is powered on only after the two battery packs are plugged into the AC charging device 360, the AC charging device 360 obtains the remaining electric quantities of the two battery packs, and prioritizes charging the battery pack with the larger remaining electric quantity. After the battery pack with the larger remaining electric quantity is fully charged, the AC charging device 360 charges the battery pack with the smaller remaining electric quantity. If the remaining electric quantities of the two battery packs are the same, the AC charging device 360 randomly selects one of the battery packs for charging.

When the AC charging device 360 is connected to the commercial power, the staff mounts the battery pack with empty electric quantity to the AC charging device 360, and the AC charging device 360 charges the battery packs according to the installation order of the battery packs. Optionally, the battery pack inserted into the AC charging device 360 first is charged first. For example, after the AC charging device 360 is powered on, if a battery pack is first mounted to the charging interface 361a, the AC charging device 360 first charges the battery pack on the charging interface 361a. When the AC charging device 360 is charging the battery pack on the charging interface 361a, the staff mounts a battery pack to the charging interface 361b, and the charger charges the battery pack on the charging interface 361b after fully charging the battery pack on the charging interface 361a.

If both charging interfaces 361a and 361b are pre-mounted with battery packs before the AC charging device 360 is connected to the commercial power, after the AC charging device 360 is powered on, it obtains the remaining electric quantities of the two battery packs and charges the battery pack with the smaller remaining electric quantity first. When the remaining electric quantities of the two battery packs are the same, the AC charging device 360 randomly selects one of the battery packs for charging.

Since a large number of backpack battery packs and handheld battery packs are needed for garden trimming, the working team needs to fully charge more battery packs at night. The number of charging interfaces arranged on the AC charging device is limited. In order to meet the charging demand of more battery packs, the energy supply system further includes a charging cabinet. The charging cabinet includes at least one charging cabinet interface and at least one charging module. The charging cabinet interface is used for detachably connecting with the backpack battery pack and/or the handheld battery pack. The charging module is used for connecting with the charging interface and transmitting the electric energy output by the charging interface to the charging cabinet interface, so as to charge the backpack battery pack and/or the handheld battery pack.

The energy supply system includes the charging cabinet, which can expand the charging interfaces, thus meeting the charging demand of more battery packs. When the working team returns home at night, the AC charging device and the charging cabinet can be used to recharge each battery pack with insufficient electric quantity in the battery pack system, so as to meet the work demand during the day of the next day.

It should be noted that when the charging cabinet is connected to the AC charging device, the charging module receives the DC power output from the AC charging device, converts the DC power into DC power, and then transmits the DC power to the charging cabinet interface. Therefore, the charging module is a power conversion module for converting DC power to DC power (Direct Current-Direct Current).

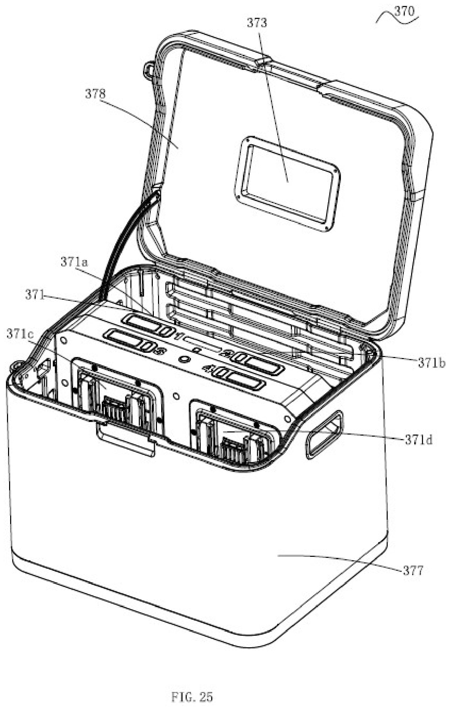

In some embodiments, as shown in Figure 25, the energy supply system 30 further includes a charging cabinet 370. The charging cabinet 370 includes charging cabinet interfaces 371, and there are four charging cabinet interfaces 371, which are 371a, 371b, 371c and 371d respectively. The two charging cabinet interfaces 371a and 371b are arranged opposite to the other two charging cabinet interfaces 371c and 371d. Of course, the number of charging cabinet interfaces can also be 6, 8 or others, which is not limited by the present application.

Specifically, the structure of the charging cabinet interface 371 is the same as the structure of the charging interfaces 361a and 361b. That is, the four charging cabinet interfaces 371a, 371b, 371c and 371d can all be mounted with the backpack battery pack 200 and the handheld battery pack 210. In other words, the charging cabinet interfaces 371a, 371b, 371c and 371d all include the structures of the input interface 310 and the output interface 320.

The charging cabinet 370 further includes a cabinet body 377 and a cover body 378. The cabinet body 377 encloses a containing space for containing the backpack battery pack and/or the handheld battery pack. The cover body 378 can be operated to open or close the containing space. The containing space can be closed, and the backpack battery pack and/or the handheld battery pack can be protected from water, dust, temperature control, etc. through the charging cabinet 370, so that the charging safety can be improved. Optionally, the cover body 378 is pivotally connected with the cabinet body 377.

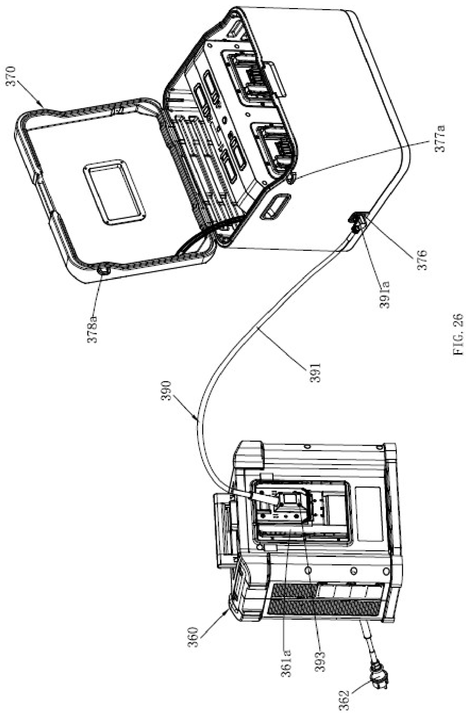

In order to realize power transmission, the energy supply system further includes a connecting device. The charging cabinet is provided with an input interface for receiving electric energy output by the AC charging device. The connecting device is configured to connect the charging interface and the input interface, so as to transmit the electric energy output by the charging interface to the charging cabinet. In some embodiments, as shown in Figure 26, the energy supply system 30 further includes a connecting device 390. The charging cabinet 370 includes an input interface 376. The connecting device 390 is configured to connect the charging interface 361a and the input interface 376, so as to transmit the electric energy output by the charging interface 361a to the charging cabinet 370.

One end of the charging interface 361a is used for connecting the input interface 376, and the other end is used for connecting the AC charging module 365; one end of the input interface 376 is used for connecting the charging interface 361a, and the other end is used for connecting the DC charging module 375.

Optionally, one end of the connecting device is fixedly connected with the charging cabinet, and the other end is detachably connected with the AC charging device; or one end of the connecting device is fixedly connected with the AC charging device, and the other end is detachably connected with the charging cabinet; or one end of the connecting device is detachably connected with the charging cabinet, and the other end is detachably connected with the AC charging device; which is not limited by the present application.

In this embodiment, the connecting device 390 is detachably connected with both the AC charging device 360 and the charging cabinet 370. Specifically, the connecting device 390 includes a cable 391 and an adapter 393 connected to one end of the cable 391. The cable 391 is used for connecting the input interface 376, and the adapter 393 is used for connecting the AC charging device 360. Of course, the cable can also be used for connecting the output interface of the AC charging device, and the adapter can also be used for connecting the charging cabinet.

Further, the adapter 393 includes an adapter interface (not shown) for connecting the AC charging device 360 or the charging cabinet 370. In this embodiment, the adapter interface 393a is configured to have the same structure as the aforementioned handheld battery pack interface, so the adapter interface 393a can be detachably connected with any charging interface 361a or any charging cabinet interface 361b. Of course, the adapter interface can also be configured to have the same structure as the backpack battery pack interface, or configured to have a cable head structure, and the charging interface or charging cabinet interface connected with the adapter interface is configured to have a socket form matched with the cable head, which is not limited herein.

Further, the connecting device 390 further includes a cable head 391a connected to the other end of the cable 391. The cable head 391a is used for connecting the input interface 376 of the charging cabinet 370. It should be noted that the connection between the cable head and the input interface can be a fixed connection or a detachable connection.

In some embodiments, as shown in the schematic diagram of the circuit structure of the charging cabinet 370 provided in Figure 27, the charging cabinet 370 further includes a first management module 372 arranged in the cabinet body 377. The first management module 372 can establish a communication connection with the AC charging device 360, send the first electrical parameter information of the charging cabinet 370 to the AC charging device 360, and receive the communication information sent by the AC charging device 360.

Specifically, the charging power of the charging cabinet 370 is all provided by the AC charging device 360. Therefore, it is necessary to send various parameters of the charging cabinet 370 itself, that is, the first electrical parameter information, to the AC charging device 360, and receive the communication information including various electrical parameters and control commands of the AC charging device 360 provided by the AC charging device 360, so as to realize the management of the charging cabinet 370 based on the information.

In some embodiments, the first management module 372 is further configured to control at least one of the following according to the first electrical parameter information of the charging cabinet 370 itself and the communication information sent by the AC charging device 360: parameter collection of the charging cabinet 370, power distribution to each charging cabinet interface 371a, 371b, 371c and 371d, dynamic monitoring of each charging cabinet interface 371a, 371b, 371c and 371d, fault detection feedback and processing.

Specifically, to ensure the normal operation of the charging cabinet 370, it is necessary to obtain various electrical parameters of the charging cabinet 370 in real time, so as to perform further management and control based on the various electrical parameters. When the charging cabinet 370 receives the charging power from the AC charging device 360, it controls the power distribution to each charging cabinet interface 371a, 371b, 371c and 371d according to a preset priority order, and monitors the charging state of each charging cabinet interface 371a, 371b, 371c and 371d in real time; during the entire charging process, the first management module 372 also needs to perform fault detection and fault processing on each module of the charging cabinet 370.

Optionally, the preset priority order includes at least the position order of the charging cabinet interfaces 371a, 371b, 371c and 371d, the insertion order of the battery packs, the order of the capacities of the battery packs from high to low or from low to high, the order of the remaining electric quantities of the battery packs from high to low or from low to high, the order of the charging times of the battery packs from long to short or from short to long, the order of the charging rates of the battery packs from high to low or from low to high, the order of the temperatures of the battery packs from high to low or from low to high, etc., which can be set according to actual needs, and is not specifically limited here. In particular, the priority order can also be set through wireless communication and remote control using a mobile device.

In some embodiments, the charging cabinet 370 further includes a heating module (not shown), and the heating module is at least partially arranged in the cabinet body 377. Specifically, the heating module can be arranged on the side and/or bottom of the cabinet body 377 to realize the temperature rise of the interior of the charging cabinet 370. The heating module includes a variety of heating methods, such as directly heating the air, heating the heat dissipation fins, etc. It can be understood that when the charging cabinet 370 works outdoors or in cold winter, the extremely low temperature is not suitable for charging the battery packs, and the charging efficiency is extremely low. Therefore, it is necessary to arrange a heating module in the charging cabinet 370 to cope with the adverse effects caused by the low-temperature environment.

Further, usually, a lower threshold of charging low temperature and an upper threshold of charging low temperature are preset, which can be realized by software or hardware. The hardware method is realized by using a simple comparator or setting the above thresholds in a hardware circuit, and the software method is realized by presetting the above thresholds in the first management module 372 and controlling whether to heat based on the comparison result between the thresholds and the actual temperature. Taking the software method as an example, the first management module 372 is preset with a lower threshold of charging low temperature and an upper threshold of charging low temperature, where the lower threshold of charging low temperature is the lower limit condition for enabling the heating module, and the upper threshold of charging low temperature is the upper limit condition for stopping the heating module. That is, when the first management module 372 determines that the detected real-time temperature of the charging cabinet 370 is lower than the lower threshold of charging low temperature, it generates a heating instruction to the heating module, and the heating module responds to the heating instruction and executes the heating operation; when the first management module 372 determines that the detected real-time temperature of the charging cabinet 370 is higher than the upper threshold of charging low temperature, it generates a heating stop instruction to the heating module, and the heating module responds to the heating stop instruction and executes the heating stop operation.

In some embodiments, a heating fan (not shown) used with the heating module is further arranged in the charging cabinet 370. When the heating module is enabled, it can heat the heat dissipation fins on the inner side of the bottom of the cabinet body 377. In order to realize the temperature balance in the containing cavity of the charging cabinet 370, a heating fan is usually used in combination, that is, when the heating module executes the heating operation, the heating fan is turned on at the same time to blow the hot air of the heated heat dissipation fins to all parts in the charging cabinet 370, thereby improving the heating efficiency and effect.

In some embodiments, the charging cabinet 370 further includes a cooling module (not shown), and the cooling module is at least partially arranged in the cabinet body to avoid the risks of low charging efficiency and insecurity caused by too high ambient temperature, or too high temperature of the battery pack during charging, or too high temperature of the charging cabinet itself. Optionally, a cooling fan (not shown) used with the cooling module is further arranged in the charging cabinet 370, and the cooling fan is used to generate air flow, thereby cooling the backpack battery pack and/or the handheld battery pack. The cooling fan and the heating fan can be the same fan or different fans.

Similar to the heating module, usually at least a lower threshold of charging high temperature is preset, which can be realized by software or hardware. The hardware method is realized by using a simple comparator or setting the above threshold in a hardware circuit, and the software method is realized by presetting the above threshold in the first management module 372 and controlling whether cooling is needed based on the comparison result between the threshold and the actual temperature. Taking the software method as an example, the first management module 372 is preset with a preset lower threshold of charging high temperature, which is the lower limit condition for enabling the heat dissipation module. That is, when the first management module 372 determines that the detected real-time temperature of the charging cabinet 370 is higher than the lower threshold of charging high temperature, it generates a cooling instruction to the cooling module, and the cooling module responds to the cooling instruction and executes the cooling operation.

Of course, a cooling stop threshold can also be preset. For example, when the first management module 372 determines that the detected real-time temperature of the charging cabinet 370 is not higher than the cooling stop threshold, it generates a cooling stop instruction to the cooling module, and the cooling module responds to the cooling stop instruction and stops cooling.

In some embodiments, the cooling module can also stop in response to the activation of the heating module. That is, during the cooling operation of the cooling module, if the first management module 372 generates a heating instruction, it means that cooling is no longer needed, and a cooling stop instruction will be generated correspondingly to stop the operation of the cooling module. It can be understood that the cooling module can execute the cooling operation in response to any of the conditions of the activation of the heating module and reaching the preset lower threshold of charging high temperature.

The temperature of the charging cabinet 370 includes at least one of the ambient temperature in the charging cabinet 370, the temperature of the battery pack, and the temperature of the first management module 372.

Optionally, the heating module and the cooling module use the power provided by the AC charging device 360 to work. In order to avoid power loss of each battery pack to be charged in the charging cabinet 370, the external power received from the charging cabinet 370 is preferentially used to supply power to each module.

In some embodiments, as shown in Figure 25, the charging cabinet 370 further includes a display module 373. Optionally, the display module 373 is arranged on the cover body 378, or any other suitable position on the charging cabinet 370, which is not specifically limited here.

The display module 373 is used to display at least one of the following: the connection state with the AC charging device 360, the power state of the AC charging device 360, the charging state of the AC charging device 360 for the charging cabinet 370, the access state or charging state or charging time of each charging cabinet interface 371a, 371b, 371c and 371d in the charging cabinet 370, the electrical parameters of the battery pack connected to each charging cabinet interface 371a, 371b, 371c and 371d, the continuous working time of the charging cabinet 370 or the AC charging device 360, the date, the temperature, the communication state, the cooling state, the heating state. The specific display information is not limited to this.

In some embodiments, the charging cabinet 370 further includes a locking module for unlocking and locking the cover body 378 and the cabinet body 377. Through the locking module, the user can lock the charging cabinet 370 to play a role in anti-theft, rainproof, fireproof, etc. during the charging process.

In some embodiments, the locking module includes at least one of a mechanical locking mode and an electric locking mode; the mechanical locking mode usually includes a mechanical lock; the electric locking mode is usually an electric locking lock.

Specifically, when the locking module adopts the mechanical locking mode, as shown in Figure 26, the locking module includes a first locking ring 378a arranged on the cover body 378 and a second locking ring 377a arranged on the cabinet body 377. When the lock passes through the first locking ring 378a and the second locking ring 377a and is fastened, the locking between the cover body 378 and the cabinet body 377 can be realized. Or, when the locking module adopts the electric locking mode, the locking module responds to the locking control signal sent by the received first management module 372 to lock the cabinet body 377 and the cover body 378 of the charging cabinet.

In some embodiments, the charging cabinet 370 may further include a wireless management module (not shown) for wireless communication with an external device. For example, when the charging cabinet 370 establishes wireless communication with the user's mobile device, the user can generate a locking instruction on the user's mobile device and send it to the charging cabinet 370, and the first management module 372 controls the locking module to lock the cabinet body 377 and the cover body 378 based on the locking instruction.

In some embodiments, the charging cabinet 370 is further provided with a trigger key (not shown) for activating the charging cabinet 370 to perform further charging work. When the trigger key is triggered externally, the charging cabinet 370 is activated, and the display module 373 is turned on at the same time. The trigger key can be optionally arranged on the cabinet body 377 or the cover body 378.

Specifically, the trigger key can respond to an external trigger and send an activation signal to the first management module 372; the first management module 372 responds to the activation signal and detects the power supply state of the AC charging device 360 connected to the charging cabinet 370; correspondingly, when the first management module 372 determines that the power supply state indicates that the AC charging device 360 allows the charging power to be output to the charging cabinet 370, it controls the continuous output of a power supply signal to realize the power supply self-locking of the first management module 372; in one embodiment, considering that the charging cabinet 370 itself has no stored power, the power supply self-locking of the first management module 372 is first supplied by one of the battery packs on the charging cabinet 370. After the power supply self-locking is maintained for a certain period of time, in order to avoid unnecessary power loss of the battery pack, the power supply is switched to be supplied by the AC charging device 360. When the first management module 372 determines that the power supply state indicates that the AC charging device 360 does not allow the charging power to be output to the charging cabinet 370, it controls to stop outputting the power supply signal after a first preset time delay, so as to disconnect the power supply to the first management module 372.

In some embodiments, when the first management module 372 determines that all charging cabinet interfaces have no charging demand, the charging cabinet 370 fails, or the continuous working time of the charging cabinet 370 exceeds a second preset time, it controls to stop outputting the power supply signal, so as to disconnect the power supply to the first management module 372. That is, when the charging cabinet 370 has the above situations, there is no need to continue charging or it is not suitable to continue charging, so the charging operation is stopped to prevent unnecessary loss of the electric quantity of the fully charged battery pack or ensure the charging safety of the charging cabinet.

When the AC charging device 360 is electrically connected to the charging cabinet 370, the AC charging device 360 is further used to control the output of charging power to the charging cabinet 370. That is, the AC charging device 360 controls the specific charging process of the charging cabinet 370, and the charging cabinet 370 does not perform charging control on each charging cabinet charging interface 371a, 371b, 371c and 371d, but only distributes power to each charging cabinet charging interface 371a, 371b, 371c and 371d.

Continuing to refer to Figure 27, the AC charging device 360 further includes an input power interface 362 and a main control module 363. The main control module 363 is used to output a power processing control signal to the charging circuit 364 when detecting that the input power is connected.

In some embodiments, the input power includes at least an AC input power. As shown in Figure 26, the AC charging device 360 is connected to the AC input power from the input power interface 362. In addition, the input power may also include, but is not limited to, a DC input power, and the AC charging device may be connected to the DC input power from the input power interface.

In some embodiments, the input power includes a DC input power, and the AC charging device 360 can be connected to the DC input power through the charging interface 361. The AC charging device 360 is further used to receive the DC input power connected to a charging interface 361 and output charging power to the charging cabinet 370. Specifically, for example, a DC power source connected to a charging interface 361 can be used as a DC input power source to charge the charging cabinet 370 connected to the AC charging device 360.

In some embodiments, the main control module 363 is further used to generate a charging control signal according to the second electrical parameter information of the AC charging device 360 and the first electrical parameter information of the charging cabinet 370, so as to control the output of charging power to the charging interface 361 and/or the output of charging power to the charging cabinet 370.

Specifically, in one implementation mode, the first electrical parameter information includes at least one of the following: the number of charging cabinet interfaces 371 of the charging cabinet 370, the load demand parameter of the charging cabinet interface 371 of the charging cabinet 370, the safety parameter of the charging cabinet 370, the fault threshold of the charging cabinet 370. In one implementation mode, the second electrical parameter information includes at least one of the following: the electrical parameter of the charging interface 360, the charging capacity parameter of the AC charging device 360, the safety parameter of the AC charging device 360, the fault threshold of the AC charging device 360.

In some embodiments, the first electrical parameter information may include at least a parameter representing the load state of the charging cabinet 370, and the second electrical parameter information includes at least a parameter representing the load state of the charging interface 361. The charging control signal may include at least a charging priority signal; the main control module 363 is further used to generate a charging priority signal for the charging interface 361 and/or the charging cabinet 371 according to the parameter representing the load state of the charging interface 361 and the parameter representing the load state of the charging cabinet 371, so as to control the charging circuit to output charging power to the charging interface 361 and/or the charging cabinet (such as the charging cabinet 370) according to the charging priority.

The charging priority signal usually represents a preset priority order; the preset priority order includes at least the position order of the charging interface 361 and the charging cabinet interface 371, the insertion order of the battery packs, the order of the capacities of the battery packs from high to low or from low to high, the order of the remaining electric quantities of the battery packs from high to low or from low to high, the order of the charging times of the battery packs from long to short or from short to long, the order of the charging rates of the battery packs from high to low or from low to high, the order of the temperatures of the battery packs from high to low or from low to high, etc., which can be set according to actual needs, and is not specifically limited here. In particular, the priority order can also be set through wireless communication and remote control using a mobile device.

In some embodiments, the main control module 363 may also be used, but not limited to, to control at least one of the following according to the first electrical parameter information and the second electrical parameter information: the charging mode of the AC charging device 360, the power output to each charging interface 361 of the AC charging device 360, the fault detection and processing of the AC charging device 360 and/or the charging cabinet 370, etc.

Specifically, to ensure the coordinated normal operation of the AC charging device 360 and the charging cabinet 370, it is necessary to obtain various electrical parameters of the AC charging device 360 and the charging cabinet 370 in real time, so as to perform further management and control based on the various electrical parameters. When the AC charging device 360 and the charging cabinet 370 work in coordination, the AC charging device 360 performs charging control, that is, controls at least one of the charging mode of the AC charging device 360, the power output to each charging interface 361a, 361b of the AC charging device 360 and the charging cabinet 370, and the fault detection and processing of the AC charging device 360 and/or the charging cabinet 370.

In some embodiments, the energy supply system 30 further includes a wireless communication module, and the wireless communication module can be optionally arranged in the AC charging device 360 or the charging cabinet 370. Taking the wireless communication module 379 arranged in the AC charging device 360 as an example, the main control module 363 is further used to control at least one of the following: receiving a control instruction sent by a mobile device through the wireless communication module 379, and outputting a corresponding charging control signal according to the control instruction; receiving a program update instruction sent by the mobile device through the wireless communication module 379, and updating the program of the AC charging device 360 and/or the charging cabinet 370 according to the program update instruction; sending the device parameter information of at least one of the battery pack, the AC charging device 360 and the charging cabinet 370 to the mobile device through the wireless communication module 379.

It can be understood that when the AC charging device establishes wireless communication with the mobile device through the wireless communication module, it can also receive various function instructions such as display, locking, heating and cooling sent by the mobile device for controlling the AC charging device and/or the charging cabinet, so as to realize remote control of the energy supply system.

The AC charging device 360 in the energy supply system 30 provided in this embodiment can be detachably connected to the backpack battery pack and/or the handheld battery pack, and can control the output of charging power to the charging cabinet 370 and the charging interface 361. Therefore, the backpack battery pack and/or the handheld battery pack can receive the charging power provided by the AC charging device 360 either directly through the charging interface 361 of the AC charging device 360 or through the charging cabinet 370, and the charging flexibility is high. The charging cabinet 370 does not need to be additionally provided with a charging module, which reduces the volume and cost of the charging cabinet 370 and also reduces unnecessary power loss during the charging process. In addition, the charging cabinet 370 expands the number of charging interfaces, so that the user can fully charge a plurality of backpack battery packs and/or handheld battery packs at one time to meet the power demand for the next day.

Figure 28 is a schematic diagram of a circuit structure of another energy supply system provided by some embodiments of the present application. The energy supply system includes an AC charging device 360a, a first charging cabinet 370a and at least one second charging cabinet 370b (only one is shown in Figure 28, but the present application is not limited to this).

The AC charging device 360a includes a charging interface 361a and a main control module 363a. In one implementation mode, the AC charging device 360a may further include a charger output interface 366a. The charger output interface 366a is used to connect the first charging cabinet 370a or the second charging cabinet 370b. The first charging cabinet 370a and the second charging cabinet 370b can be optionally connected to the charging interface 361a or the charger output interface 366a to obtain power.

In some embodiments, the first charging cabinet 370a includes a first management module 372a and a charging cabinet interface 373a.

Specifically, the structure and/or working principle of at least one of the charging interface 361a, the main control module 363a in the AC charging device 360a, the first management module 372a in the first charging cabinet 370a, and the charging interface 361a can refer to the corresponding description of the AC charging device 360 above, which will not be repeated here.

In some embodiments, the second charging cabinet 370b is used to connect to the charging interface 361a and/or the charger output interface 366a of the AC charging device 360a to receive the charging power provided by the AC charging device 360a. In other embodiments, the second charging cabinet 370b may also be connected to the output interface of the first charging cabinet 370a, but not limited to this, to receive the charging power provided by the AC charging device 360a, where the output interface of the first charging cabinet 370a may be configured as the charging cabinet interface 373a.

Specifically, in some embodiments, the second charging cabinet 370b includes a second management module 372b. The second management module 372b is used to establish a communication connection with the main control module 363a of the AC charging device 360a to receive the second electrical parameter information and the charging control signal sent by the main control module 363a, and send the third electrical parameter of the second charging cabinet 370b to the main control module 363a or to the main control module 363a through the first management module 372a of the first charging cabinet 370a, and send a corresponding charging control instruction to control the charging process of the second charging cabinet 370b.

Specifically, in some embodiments, the second management module 372b is used to control at least one of the following according to the third electrical parameter information: parameter collection of the second charging cabinet 370b, power distribution to the charging cabinet interface 371 of each second charging cabinet 370b, charging management work of the second charging cabinet 370b, fault detection feedback and processing.

The energy supply system 30 of this embodiment includes the AC charging device 360a, the first charging cabinet 370a and at least one second charging cabinet 370b. The at least one second charging cabinet 370b can be connected to the charging interface 361a of the first charging cabinet 370a to receive the charging power provided by the AC charging device 360a, or can be directly connected to the charger output interface 366a of the AC charging device 360a to receive the charging power provided by the AC charging device 360a, which can further improve flexibility. In addition, the charging power of the first charging cabinet 370a and the second charging cabinet 370b can be uniformly provided by the AC charging device 360a. Therefore, there is no need to set corresponding charging circuits in the first charging cabinet 370a and the second charging cabinet 370b, which can simplify the electrical design of the first charging cabinet 370a and the second charging cabinet 370b, avoid redundancy of the charging circuits, and further reduce the cost of the charging system. In addition, the power distribution of the charging cabinet charging interfaces corresponding to the first charging cabinet 370a and the second charging cabinet 370b is respectively realized by their corresponding first management module 372a and first management module 372b, which can improve the accuracy and timeliness of power distribution management.

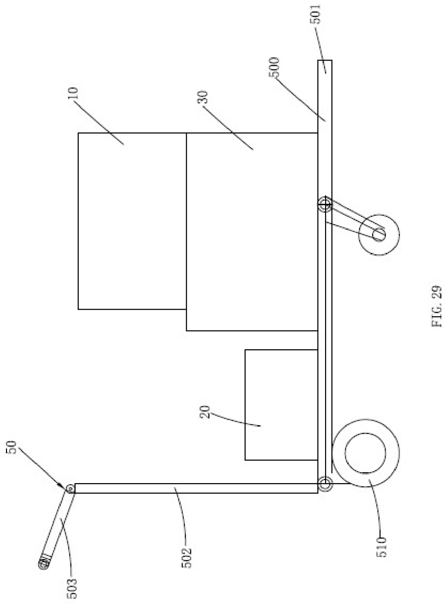

In some embodiments, as shown in Figure 29, the working system 1 further includes a cart 50. The cart 50 includes a cart main body 500 and rollers 510 supporting the cart main body 500. The cart 50 is used to transport at least one of the power tool system 10, the battery pack system 20 and the energy supply system 30.

Since garden maintenance work often requires changing work sites, the cart 50 can solve the transportation problem of the working system 1 and facilitate the user to move various devices.

Specifically, the cart main body 500 includes a bracket 501 and a push rod 502. The bracket 501 is configured to place various devices in the working system 1. The bracket 501 is connected to the rollers 510, and the push rod 502 is connected to the bracket 501 at an angle. In this embodiment, the extending direction of the push rod 502 is perpendicular to the extending direction of the bracket 501.

Further, the cart main body 500 further includes a handle 503, and the handle 503 is connected to the push rod 502. Optionally, the handle 503 is pivotally connected to the push rod 502, and the user can change the angle of the handle to realize comfortable pushing.

The present application further provides a working system, comprising a power supply system and a power tool system, and the power supply system comprises a battery pack system and an energy supply system.

The battery pack system includes a first type of battery pack and a second type of battery pack, the first type of battery pack is configured to be detachably mounted to a first type of power tool to supply power thereto, and the second type of battery pack is configured to be detachably mounted to a second type of power tool to supply power thereto; wherein, the rated electric quantity range of the first type of battery pack is 550-3000Wh, and the weight range of the first type of battery pack is 4-12 Kg;
the energy supply system includes a DC charging device, the DC charging device includes an input interface and an output interface, the input interface is configured to detachably mount the first type of battery pack, and the output interface is configured to detachably mount the first type of battery pack;
the DC charging device further includes at least one DC charging module, and the DC charging module is configured to convert the electric energy of the first type of battery pack and transmit the converted electric energy to the second type of battery pack, so that the first type of battery pack charges the second type of battery pack.

When the working team carries the above working system to work outdoors, since the first type of battery pack can not only supply power to the power tools, in other words, the first type of battery pack can be used as a tool pack, and at the same time, the first type of battery pack can also be used as an energy storage pack to supply power to the second type of battery pack. This can enable the second type of battery pack to be recharged in time, so as to realize the cyclic use of a small number of second type of battery packs. There is no need to carry and purchase a large number of battery packs, and the power tool system can work for a long time, thus improving the work efficiency. In addition, the first type of battery pack has a large electric quantity and a light weight, which can not only supplement sufficient power to the second type of battery pack, but also be portable to carry and use. Moreover, the user can use the second type of battery pack more, and the second type of battery pack can be directly mounted to the second type of power tool for use without being carried on the back, so the user can use it more conveniently and at a lower cost.

Specifically, the specific structure of the power supply system and the power tool system, as well as the mutual mechanical connection and electrical connection relationship, can refer to Figures 2 to 28 and the corresponding descriptions above, which will not be repeated here. It should be noted that the first type of battery pack may be configured as a backpack battery pack, and the second type of battery pack may be configured as a handheld battery pack.

The present application further provides an energy supply system, comprising a DC charging device. The DC charging device comprises an input interface and an output interface, the input interface is configured to detachably mount a first type of battery pack, and the output interface is configured to detachably mount a second type of battery pack.

The DC charging device further includes a DC charging module, and the DC charging module is used to convert the electric energy of the first type of battery pack and transmit the converted electric energy to the second type of battery pack, so that the first type of battery pack charges the second type of battery pack. Wherein, the DC charging device is only provided with the input interface for receiving power input.

The DC charging device in the above energy supply system is only provided with the input interface for receiving power input, and no other DC input interfaces and/or AC input interfaces are provided, which simplifies the power conversion module, making the DC charging device compact in structure, light and portable, and low in cost.

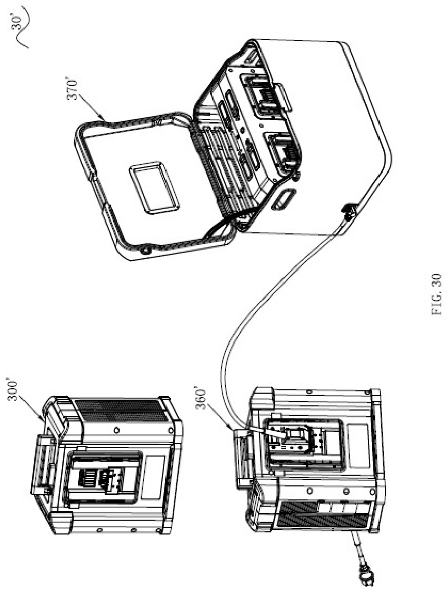

In some embodiments, as shown in Figure 30, the energy supply system 30' includes a DC charging device 300'. Specifically, the specific structure of the DC charging device can refer to Figures 17 to 23 and the corresponding descriptions above, which will not be repeated here. It should be noted that the first type of battery pack may be configured as the aforementioned backpack battery pack, and the second type of battery pack may be configured as the aforementioned handheld battery pack.

Further, the energy supply system further includes at least one AC charging device. The AC charging device includes an input power interface, at least one charging interface and at least one AC charging module. The input power interface is configured to connect to an AC power source, the charging interface is configured to detachably mount the first type of battery pack and/or the second type of battery pack, and the AC charging module is configured to connect to the input power interface, convert AC electric energy into DC electric energy and output the DC electric energy to the charging interface, so as to charge the first type of battery pack and/or the second type of battery pack.

The energy supply system includes a DC charging device and an AC charging device, so that the working team can only carry the DC charging device when working during the day, and use the backpack battery pack as an energy storage pack to supply power to the handheld battery pack, so as to realize long-time work. After returning home at night, the AC charging device is used to charge the backpack battery packs and/or the handheld battery packs to meet the power demand for work the next day. This arrangement enables the working team to carry no more devices when working during the day, and easily realize carrying and handling.

In some embodiments, continuing to refer to Figure 30, the energy supply system 30' further includes an AC charging device 360'. Specifically, the specific structure of the AC charging device can refer to Figure 23 and the corresponding description above, which will not be repeated here.

Further, the energy supply system further includes a charging cabinet. The charging cabinet includes at least one charging cabinet interface and at least one charging module. The charging cabinet interface is configured to be detachably connected to the first type of battery pack and/or the second type of battery pack, and the charging module is configured to connect to the charging interface and transmit the electric energy output by the charging interface to the charging cabinet, so as to charge the first type of battery pack and/or the second type of battery pack.

The energy supply system includes the charging cabinet, which can expand the charging interfaces, thus meeting the charging demand of more battery packs. When the working team returns home at night, the AC charging device and the charging cabinet can be used to recharge each battery pack with insufficient electric quantity, so as to meet the work demand during the day of the next day.

In some embodiments, continuing to refer to Figure 30, the energy supply system 30' further includes a charging cabinet 370'. Specifically, the specific structure of the charging cabinet and the connection between the charging cabinet and the AC charging device can refer to Figures 23 to 28 and the corresponding descriptions above, which will not be repeated here.

The technical features of the above-described embodiments can be arbitrarily combined. For the sake of brevity, all possible combinations of the technical features in the above-described embodiments are not described. However, as long as there is no contradiction between the combinations of these technical features, they should be considered as being within the scope described in the present specification.

The above-described embodiments only express several implementation modes of the present application, and the descriptions thereof are more specific and detailed, but they should not be construed as limiting the scope of the patent of the present application. It should be pointed out that for those of ordinary skill in the art, without departing from the concept of the present application, several modifications and improvements can be made, and these all fall within the protection scope of the present application. Therefore, the protection scope of the present application should be subject to the appended claims.

## Claims

1. A power supply system, comprising a battery pack system and an energy supply system; the battery pack system comprises a backpack battery pack and a handheld battery pack, the backpack battery pack is configured to be detachably mounted to a first type of power tool to supply power thereto, and the handheld battery pack is configured to be detachably mounted to a second type of power tool to supply power thereto; wherein, the backpack battery pack is configured to be carried by a user; the energy supply system comprises a DC charging device, the DC charging device comprises an input interface and an output interface, the input interface is configured to detachably mount the backpack battery pack, and the output interface is configured to detachably mount the handheld battery pack; the DC charging device further comprises at least one DC charging module, and the DC charging module is configured to receive electric energy from the input interface, convert the electric energy and transmit the electric energy to the output interface, so that the backpack battery pack charges the handheld battery pack.

2. The power supply system according to claim 1, wherein the power supply system further comprises a carrying device, the carrying device is configured to be carried by the user, the carrying device comprises a cable, and a plug interface and a first carrying interface connected by the cable, the first carrying interface is configured to detachably mount the backpack battery pack, the plug interface is configured to detachably connect the second type of power tool, and when the second type of power tool is connected to the plug interface and the backpack battery pack is mounted to the first carrying interface, the backpack battery pack supplies power to the second type of power tool.

3. The power supply system according to claim 2, wherein the first carrying interface comprises a pair of first connecting portions extending along a first plugging direction, and the first connecting portion is configured to guide the backpack battery pack to connect with the carrying device along the first plugging direction.

4. The power supply system according to any one of claims 1-3, wherein the power supply system further comprises a carrying device, the carrying device is configured to be carried by a user, the carrying device comprises a cable, and a plug interface and a second carrying interface connected by the cable, the second carrying interface is configured to detachably mount the handheld battery pack, the plug interface is configured to detachably connect the second type of power tool, and when the second type of power tool is connected to the plug interface and the handheld battery pack is mounted to the second carrying interface, the handheld battery pack supplies power to the second type of power tool.

5. The power supply system according to claim 4, wherein the second carrying interface comprises a pair of second connecting portions extending along a second plugging direction, and the second connecting portion is used for guiding the handheld battery pack to connect with the carrying device along the second plugging direction.

6. The power supply system according to any one of claims 1-5, wherein the first type of power tool further comprises a backpack frame, the backpack frame is configured for a user to carry the first type of power tool, and the backpack battery pack is configured to be detachably mounted to the backpack frame, so that the backpack battery pack supplies power to the first type of power tool.

7. The power supply system according to any one of claims 1-6, wherein the handheld battery pack is configured to be detachably mounted to the first type of power tool, so that the handheld battery pack supplies power to the first type of power tool.

8. The working system according to any one of claims 1-7, wherein the rated power of the first type of power tool is greater than the rated power of the second type of power tool.

9. The power supply system according to any one of claims 1-8, wherein the weight range of the backpack battery pack is 4-12 Kg.

10. The power supply system according to any one of claims 1-9, wherein the rated electric quantity range of the backpack battery pack is 550-3000 Wh.

11. The power supply system according to any one of claims 1-10, wherein the ratio range of the rated electric quantity to the weight of the backpack battery pack is 60-300 Wh/Kg.

12. The power supply system according to any one of claims 1-11, wherein the ratio range of the rated electric quantity to the volume of the backpack battery pack is 40-220 Wh/L.

13. The power supply system according to any one of claims 1-12, wherein the discharge rate of the backpack battery pack is greater than or equal to 2C.

14. The power supply system according to any one of claims 1-13, wherein the maximum output power of the backpack battery pack is greater than or equal to 2 Kw.

15. The power supply system according to any one of claims 1-14, wherein the average charging power of the DC charging device for the handheld battery pack is greater than the average discharge power of the second type of power tool for the handheld battery pack.

16. The power supply system according to any one of claims 1-15, wherein when the handheld battery pack is charged at a rate of 3C, the temperature rise of the handheld battery pack does not exceed 14°C at an ambient temperature of about 20°C; and/or when the handheld battery pack is charged at a rate of 5C, the temperature rise of the handheld battery pack does not exceed 19°C at an ambient temperature of about 20°C; when the handheld battery pack is charged at a rate of 10C, the temperature rise of the handheld battery pack does not exceed 24°C at an ambient temperature of about 25°C.

17. The power supply system according to any one of claims 1-16, wherein the internal resistance of a single cell in the handheld battery pack is less than or equal to 3mΩ.

18. The power supply system according to any one of claims 1-17, wherein the weight range of the handheld battery pack is 1-3.5 Kg.

19. The power supply system according to any one of claims 1-8, wherein the ratio range of the rated electric quantity to the weight of the backpack battery pack is 60-300Wh/Kg, and the maximum allowable charging rate of the handheld battery pack is not less than 7C.

20. The power supply system according to claim 19, wherein the discharge rate of the backpack battery pack is greater than or equal to 2C.

21. The power supply system according to claim 19 or 20, wherein the time required for the handheld battery pack to be charged from an empty state to a full state is less than or equal to the time required for the handheld battery pack to be discharged from the full state to the empty state.

22. The power supply system according to any one of claims 19-21, wherein the internal resistance of a single cell in the handheld battery pack is less than or equal to 3mΩ.

23. The power supply system according to any one of claims 19-22, wherein when the handheld battery pack is charged at a rate of 3C, the temperature rise of the handheld battery pack does not exceed 14°C at an ambient temperature of about 20°C; and/or when the handheld battery pack is charged at a rate of 5C, the temperature rise of the handheld battery pack does not exceed 19°C at an ambient temperature of about 20°C; when the handheld battery pack is charged at a rate of 10C, the temperature rise of the handheld battery pack does not exceed 24°C at an ambient temperature of about 25°C.

24. The power supply system according to any one of claims 19-23, wherein the ratio of the rated electric quantity to the weight of the backpack battery pack is greater than the ratio of the rated electric quantity to the weight of the handheld battery pack.

25. The power supply system according to any one of claims 19-24, wherein the maximum allowable charging rate of the handheld battery pack is greater than the maximum allowable charging rate of the backpack battery pack.

26. The power supply system according to any one of claims 19-25, wherein under the condition of charging at the same rate, the temperature rise of the handheld battery pack is less than the temperature rise of the backpack battery pack.

27. The power supply system according to any one of claims 19-26, wherein the internal resistance of a single cell in the handheld battery pack is less than the internal resistance of a single cell in the backpack battery pack.

28. The power supply system according to any one of claims 19-27, wherein the rated capacity of the backpack battery pack is defined as a first capacity, the rated capacity of the handheld battery pack is defined as a second capacity, and the first capacity is greater than the second capacity.

29. The power supply system according to claim 28, wherein the ratio of the first capacity to the second capacity is greater than or equal to 2.

30. The power supply system according to any one of claims 1-29, wherein the DC charging device is only provided with the input interface for receiving power input.

31. The power supply system according to any one of claims 1-30, wherein the input interface is configured to only receive power input from the backpack battery pack and not output power to the outside; and the output interface is configured to only output power to the handheld battery pack and not receive power input from the outside.

32. The power supply system according to any one of claims 1-31, wherein the input interface comprises a pair of first connecting portions extending along a first sliding direction, and the first connecting portion is used for guiding the backpack battery pack to connect with the DC charging device along the first sliding direction; and/or the output interface comprises a pair of second connecting portions extending along a second sliding direction, and the second connecting portion is used for guiding the handheld battery pack to connect with the DC charging device along the second sliding direction.

33. The power supply system according to any one of claims 32, wherein the maximum size of the first connecting portion in the first sliding direction is greater than the maximum size of the second connecting portion in the second sliding direction.

34. The power supply system according to any one of claims 1-33, wherein the DC charging device comprises a housing extending longitudinally along a height direction, and the input interface and the output interface are oppositely arranged along a width direction perpendicular to the height direction.

35. The power supply system according to any one of claims 1-34, wherein the DC charging device further comprises a heating module and/or a cooling module, which is configured to heat and/or cool the backpack battery pack and the handheld battery pack.

36. The power supply system according to any one of claims 1-35, wherein the energy supply system further comprises at least one AC charging device, the AC charging device comprises an input power interface, at least one charging interface and at least one AC charging module, the input power interface is configured to connect to an AC power source, the charging interface is configured to detachably mount the backpack battery pack and/or the handheld battery pack, and the AC charging module is configured to receive AC electric energy from the input power interface, convert the AC electric energy into DC electric energy and output the DC electric energy to the charging interface, so as to charge the backpack battery pack and/or the handheld battery pack.

37. The power supply system according to claim 36, wherein the configuration of the charging interface is the same as that of the input interface; and/or the configuration of the charging interface is the same as that of the output interface; and/or the charging interface comprises the configuration of the input interface and the output interface.

38. The power supply system according to claim 36 or 37, wherein the energy supply system further comprises a charging cabinet, the charging cabinet comprises at least one charging cabinet interface and at least one charging module, the charging cabinet interface is configured to be detachably connected to the backpack battery pack and/or the handheld battery pack, and the charging module is configured to receive electric energy from the charging interface and transmit the electric energy to the charging cabinet interface, so as to charge the backpack battery pack and/or the handheld battery pack.

39. The power supply system according to claim 38, wherein the energy supply system further comprises a connecting device, the charging cabinet comprises an input interface, and the connecting device is configured to connect the charging interface and the input interface, so as to transmit the electric energy output by the charging interface to the charging cabinet.

40. The power supply system according to claim 39, wherein the connecting device comprises a cable and an adapter connected to the cable, the cable is configured to connect to the input interface, and the adapter is configured to be detachably connected to the charging interface.

41. The power supply system according to any one of claims 38-40, wherein the charging cabinet comprises a cabinet body and a cover body, the cabinet body encloses a containing space for containing the backpack battery pack and/or the handheld battery pack, and the cover body is operable to open or close the containing space.

42. The power supply system according to any one of claims 38-40, wherein the charging cabinet is provided with a thermal management module, which is configured to control the temperature of the backpack battery pack and/or the handheld battery pack.

43. A working system, comprising: the power supply system and the power tool system according to any one of claims 1-42; the power tool system comprises a first type of power tool and a second type of power tool, the first type of power tool comprises a first tool interface, and the second type of power tool comprises a second tool interface different from the first tool interface.

44. The working system according to claim 43, wherein the working system further comprises a cart, the cart comprises a main body and rollers supporting the main body, and the cart is used for transporting at least one of the power tool system, the battery pack system and the energy supply system.

45. The working system according to claim 43 or 44, wherein the rated power of the first type of power tool is greater than the rated power of the second type of power tool.

46. A power supply system, comprising a battery pack system and an energy supply system; the battery pack system comprises a first type of battery pack and a second type of battery pack, the first type of battery pack is configured to be detachably mounted to a first type of power tool to supply power thereto, and the second type of battery pack is configured to be detachably mounted to a second type of power tool to supply power thereto; wherein, the rated electric quantity range of the first type of battery pack is 550-3000 Wh, and the weight range of the first type of battery pack is 4-12 Kg; the energy supply system comprises a DC charging device, the DC charging device comprises an input interface and an output interface, the input interface is configured to detachably mount the first type of battery pack, and the output interface is configured to detachably mount the first type of battery pack; the DC charging device further comprises at least one DC charging module, and the DC charging module is configured to receive electric energy from the input interface, convert the electric energy and transmit the converted electric energy to the output interface, so that the first type of battery pack charges the second type of battery pack.

47. The power supply system according to claim 46, wherein the first type of battery pack is configured to be carried by a user.

48. The power supply system according to claim 46 or 47, wherein the power supply system further comprises a carrying device, the carrying device is configured to be carried by a user, the carrying device comprises a cable, and a plug interface and a first carrying interface connected by the cable, the first carrying interface is configured to detachably mount the first type of battery pack, the plug interface is configured to detachably connect the second type of power tool, and when the second type of power tool is connected to the plug interface and the first type of battery pack is mounted to the first carrying interface, the first type of battery pack supplies power to the second type of power tool.

49. The power supply system according to claim 48, wherein the first carrying interface comprises a pair of first connecting portions extending along a first plugging direction, and the first connecting portion is used for guiding the first type of battery pack to connect with the carrying device along the first plugging direction.

50. The power supply system according to any one of claims 46-49, wherein the power supply system further comprises a carrying device, the carrying device is configured to be carried by a user, the carrying device comprises a cable, and a plug interface and a second carrying interface connected by the cable, the second carrying interface is configured to detachably mount the second type of battery pack, the plug interface is configured to detachably connect the second type of power tool, and when the second type of power tool is connected to the plug interface and the second type of battery pack is mounted to the second carrying interface, the second type of battery pack supplies power to the second type of power tool.

51. The power supply system according to claim 50, wherein the second carrying interface comprises a pair of second connecting portions extending along a second plugging direction, and the second connecting portion is used for guiding the second type of battery pack to connect with the carrying device along the second plugging direction.

52. The power supply system according to any one of claims 46-51, wherein the first type of power tool further comprises a backpack frame, the backpack frame is configured for a user to carry the first type of power tool, and the first type of battery pack is configured to be detachably mounted to the backpack frame, so that the first type of battery pack supplies power to the first type of power tool.

53. The power supply system according to any one of claims 46-52, wherein the second type of battery pack is configured to be detachably mounted to the first type of power tool, so that the second type of battery pack supplies power to the first type of power tool.

54. The power supply system according to any one of claims 46-53, wherein the ratio range of the rated electric quantity to the weight of the first type of battery pack is 60-300 Wh/Kg.

55. The power supply system according to any one of claims 46-54, wherein the ratio range of the rated electric quantity to the volume of the first type of battery pack is 40-220 Wh/L.

56. The power supply system according to any one of claims 46-55, wherein the discharge rate of the first type of battery pack is greater than or equal to 2C.

57. The power supply system according to any one of claims 46-56, wherein the maximum output power of the first type of battery pack is greater than or equal to 2 KW.

58. The power supply system according to any one of claims 46-57, wherein the average charging power of the DC charging device for the second type of battery pack is greater than the average discharge power of the second type of power tool for the second type of battery pack.

59. The power supply system according to any one of claims 46-58, wherein when the second type of battery pack is charged at a rate of 3C, the temperature rise of the second type of battery pack does not exceed 14°C at an ambient temperature of about 20°C; and/or when the second type of battery pack is charged at a rate of 5C, the temperature rise of the second type of battery pack does not exceed 19°C at an ambient temperature of about 20°C; when the second type of battery pack is charged at a rate of 10C, the temperature rise of the second type of battery pack does not exceed 24°C at an ambient temperature of about 25°C.

60. The power supply system according to any one of claims 46-59, wherein the internal resistance of a single cell in the second type of battery pack is less than or equal to 3mΩ.

61. The power supply system according to any one of claims 46-60, wherein the weight range of the second type of battery pack is 1-3.5 Kg.

62. The power supply system according to any one of claims 46-61, wherein the ratio range of the rated electric quantity to the weight of the first type of battery pack is 60-300 Wh/Kg, and the maximum allowable charging rate of the second type of battery pack is not less than 7C.

63. The power supply system according to any one of claims 62, wherein the discharge rate of the first type of battery pack is greater than or equal to 2C.

64. The power supply system according to any one of claims 62-63, wherein the time required for the handheld battery pack to be charged from an empty state to a full state is less than or equal to the time required for the handheld battery pack to be discharged from the full state to the empty state.

65. The power supply system according to any one of claims 62-64, wherein the internal resistance of a single cell in the second type of battery pack is less than or equal to 3mΩ.

66. The power supply system according to any one of claims 62-65, wherein when the second type of battery pack is charged at a rate of 3C, the temperature rise of the second type of battery pack does not exceed 14°C at an ambient temperature of about 20°C; and/or when the second type of battery pack is charged at a rate of 5C, the temperature rise of the second type of battery pack does not exceed 19°C at an ambient temperature of about 20°C; and when the second type of battery pack is charged at a rate of 10C, the temperature rise of the second type of battery pack does not exceed 24°C at an ambient temperature of about 25°C.

67. The power supply system according to any one of claims 62-66, wherein the ratio of the rated electric quantity to the weight of the first type of battery pack is greater than the ratio of the rated electric quantity to the weight of the second type of battery pack.

68. The power supply system according to any one of claims 62-67, wherein the maximum allowable charging rate of the second type of battery pack is greater than the maximum allowable charging rate of the first type of battery pack.

69. The power supply system according to any one of claims 62-68, wherein under the condition of charging at the same rate, the temperature rise of the second type of battery pack is less than the temperature rise of the first type of battery pack.

70. The power supply system according to any one of claims 62-69, wherein the internal resistance of a single cell in the second type of battery pack is less than the internal resistance of a single cell in the first type of battery pack.

71. The power supply system according to any one of claims 62-69, wherein the rated capacity of the first type of battery pack is defined as a first capacity, the rated capacity of the second type of battery pack is defined as a second capacity, and the first capacity is greater than the second capacity.

72. The power supply system according to claim 71, wherein the ratio of the first capacity to the second capacity is greater than or equal to 2.

73. The power supply system according to any one of claims 46-72, wherein the DC charging device is only provided with the input interface for receiving power input.

74. The power supply system according to any one of claims 46-73, wherein the input interface is configured to only receive power input from the first type of battery pack and not output power to the outside; and the output interface is configured to only output power to the second type of battery pack and not receive power input from the outside.

75. The power supply system according to any one of claims 46-74, wherein the input interface comprises a pair of first connecting portions extending along a first sliding direction, and the first connecting portion is used for guiding the first type of battery pack to connect with the DC charging device along the first sliding direction; and/or the output interface comprises a pair of second connecting portions extending along a second sliding direction, and the second connecting portion is used for guiding the second type of battery pack to connect with the DC charging device along the second sliding direction.

76. The power supply system according to claim 75, wherein the maximum size of the first connecting portion in the first sliding direction is greater than the maximum size of the second connecting portion in the second sliding direction.

77. The power supply system according to any one of claims 46-76, wherein the DC charging device comprises a housing extending longitudinally along a height direction, and the input interface and the output interface are oppositely arranged along a width direction perpendicular to the height direction.

78. The power supply system according to any one of claims 46-77, wherein the DC charging device further comprises a heating module and/or a cooling module, which is configured to heat and/or cool the first type of battery pack and the second type of battery pack.

79. The power supply system according to any one of claims 46-78, wherein the energy supply system further comprises at least one AC charging device, the AC charging device comprises an input power interface, at least one charging interface and at least one AC charging module, the input power interface is configured to connect to an AC power source, the charging interface is configured to detachably mount the first type of battery pack and/or the second type of battery pack, and the AC charging module is configured to receive AC electric energy from the input power interface, convert the AC electric energy into DC electric energy and output the DC electric energy to the charging interface, so as to charge the first type of battery pack and/or the second type of battery pack.

80. The power supply system according to claim 79, wherein the configuration of the charging interface is the same as that of the input interface; and/or the configuration of the charging interface is the same as that of the output interface; and/or the charging interface comprises the configuration of the input interface and the output interface.

81. The power supply system according to claim 79 or 80, wherein the energy supply system further comprises a charging cabinet, the charging cabinet comprises at least one charging cabinet interface and at least one charging module, the charging cabinet interface is configured to be detachably connected to the first type of battery pack and/or the second type of battery pack, and the charging module is configured to receive electric energy from the charging interface and transmit the electric energy to the charging cabinet interface, so as to charge the first type of battery pack and/or the second type of battery pack.

82. The power supply system according to claim 81, wherein the energy supply system further comprises a connecting device, the charging cabinet comprises an input interface, and the connecting device is configured to connect the charging interface and the input interface, so as to transmit the electric energy output by the charging interface to the charging cabinet.

83. The power supply system according to claim 82, wherein the connecting device comprises a cable and an adapter connected to the cable, the cable is configured to connect to the input interface, and the adapter is configured to be detachably connected to the charging interface.

84. The power supply system according to any one of claims 81-83, wherein the charging cabinet comprises a cabinet body and a cover body, the cabinet body encloses a containing space for containing the first type of battery pack and/or the second type of battery pack, and the cover body is operable to open or close the containing space.

85. The power supply system according to any one of claims 81-84, wherein the charging cabinet is provided with a thermal management module, and the thermal management module is configured to control the temperature of the first type of battery pack and/or the second type of battery pack.

86. A working system, comprising the power supply system and the power tool system according to any one of claims 46-85; the power tool system comprises a first type of power tool and a second type of power tool, the first type of power tool comprises a first tool interface, and the second type of power tool comprises a second tool interface different from the first tool interface.

87. The working system according to claim 86, wherein the working system further comprises a cart, the cart comprises a main body and rollers supporting the main body, and the cart is used for transporting at least one of the power tool system, the battery pack system and the energy supply system.

88. The working system according to claim 86 or 87, wherein the rated power of the first type of power tool is greater than the rated power of the second type of power tool.

89. An energy supply system, comprising a DC charging device, the DC charging device comprising: an input interface and an output interface, the input interface is configured to detachably mount a first type of battery pack, and the output interface is configured to detachably mount a second type of battery pack; a DC charging module, the DC charging module is configured to receive electric energy from the input interface, convert the electric energy and transmit the converted electric energy to the output interface, so that the first type of battery pack charges the second type of battery pack; wherein, the DC charging device is only provided with the input interface for receiving power input.

90. The energy supply system according to claim 89, wherein the input interface is configured to only receive power input from the first type of battery pack and not output power to the outside; and the output interface is configured to only output power to the second type of battery pack and not receive power input from the outside.

91. The energy supply system according to claim 89 or 90, wherein the input interface comprises a pair of first connecting portions extending along a first plugging direction, and the first connecting portion is used for guiding the first type of battery pack to connect with the DC charging device along the first plugging direction; and/or the output interface comprises a pair of second connecting portions extending along a second plugging direction, and the second connecting portion is used for guiding the second type of battery pack to connect with the DC charging device along the second plugging direction.

92. The energy supply system according to claim 91, wherein the maximum size of the first connecting portion in the first plugging direction is greater than the maximum size of the second connecting portion in the second plugging direction.

93. The energy supply system according to any one of claims 89-92, wherein the DC charging device comprises a housing extending longitudinally along a height direction, and the input interface and the output interface are oppositely arranged along a width direction perpendicular to the height direction.

94. The energy supply system according to any one of claims 89-93, wherein the DC charging device further comprises a heating module and/or a cooling module, which is configured to heat and/or cool the first type of battery pack and the second type of battery pack.

95. The energy supply system according to any one of claims 89-94, wherein the energy supply system further comprises at least one AC charging device, the AC charging device comprises an input power interface, at least one charging interface and at least one AC charging module, the input power interface is configured to connect to an AC power source, the charging interface is configured to detachably mount the first type of battery pack and/or the second type of battery pack, and the AC charging module is configured to receive AC electric energy from the input power interface, convert the AC electric energy into DC electric energy and output the DC electric energy to the charging interface, so as to charge the first type of battery pack and/or the second type of battery pack.

96. The energy supply system according to claim 95, wherein the configuration of the charging interface is the same as that of the input interface; and/or the configuration of the charging interface is the same as that of the output interface; and/or the charging interface comprises the configuration of the input interface and the output interface.

97. The energy supply system according to claim 95, wherein the energy supply system further comprises a charging cabinet, the charging cabinet comprises at least one charging cabinet interface and at least one charging module, the charging cabinet interface is configured to be detachably connected to the first type of battery pack and/or the second type of battery pack, and the charging module is configured to receive electric energy from the charging interface and transmit the electric energy to the charging cabinet interface, so as to charge the first type of battery pack and/or the second type of battery pack.

98. The energy supply system according to claim 97, wherein the energy supply system further comprises a connecting device, the charging cabinet comprises an input interface, and the connecting device is configured to connect the charging interface and the input interface, so as to transmit the electric energy output by the charging interface to the charging cabinet.

99. The energy supply system according to claim 98, wherein the connecting device comprises a cable and an adapter connected to the cable, the cable is configured to connect to the AC charging device, and the adapter is configured to be detachably connected to the charging interface.

100. The energy supply system according to any one of claims 97-99, wherein the charging cabinet comprises a cabinet body and a cover body, the cabinet body encloses a containing space for containing the first type of battery pack and/or the second type of battery pack, and the cover body is operable to open or close the containing space.

101. The energy supply system according to any one of claims 97-100, wherein the charging cabinet is provided with a thermal management module, and the thermal management module is configured to control the temperature of the first type of battery pack and/or the second type of battery pack.
